# EUROPEAN PATENT APPLICATION

(11) **EP 4 823 051 A1**
(43) Date of publication of application: **14.10.2026**
(21) Application number: 24906171.4
(22) Date of filing: 09.12.2024
(51) Int. Cl.: H04L 41/0803, G06N 20/00

(54) **MODEL DEPLOYMENT METHOD AND COMMUNICATION DEVICE**

(30) Priority: 21.12.2023 CN 202311777266
(71) Applicant: Huawei Technologies Co., Ltd., Shenzhen, Guangdong 518129 (CN)
(72) Inventor: HUANG, Xietian, Shenzhen, Guangdong 518129 (CN); SHI, Xiaoli, Shenzhen, Guangdong 518129 (CN); XU, Ruiyue, Shenzhen, Guangdong 518129 (CN)
(74) Representative: Gill Jennings & Every LLP
(86) International application number: PCT/CN2024/137944
(87) International publication number: WO 2025/130688

(57) **Abstract**

This application provides a model deployment method and a communication apparatus, relating to the field of communications, to help reduce the complexity of deploying a target model for a plurality of entities and improve model deployment efficiency. The method includes: A first apparatus determines identification information of a target model and a deployment scope of the target model, and sends them to a second apparatus, where the deployment scope of the target model indicates a plurality of entities that use the target model for inference. Correspondingly, the second apparatus receives the identification information of the target model and the deployment scope of the target model, and deploys the target model based on the identification information of the target model and the deployment scope of the target model.

## Description

This application claims priority to Chinese Patent Application No. 202311777266.2, filed with the China National Intellectual Property Administration on December 21, 2023 and entitled "MODEL DEPLOYMENT METHOD AND COMMUNICATION APPARATUS", which is incorporated herein by reference in its entirety.

### TECHNICAL FIELD

This application relates to the field of communications, and in particular, to a model deployment method and a communication apparatus.

### BACKGROUND

To improve the intelligence and automation levels of networks, artificial intelligence (artificial intelligence, AI) and machine learning (machine learning, ML) technologies are gradually being applied. For example, an access network device may include a type of service module (for example, an inference function) that implements a function by using a model, and the access network device may perform the corresponding function based on the model, thereby improving the intelligence level of the access network device.

After a training phase and/or an emulation phase, the model further needs to be deployed, through a deployment phase, onto an entity that performs the inference function, so that the entity can execute the inference function. A model deployment process may be understood as a process of making the model available on the entity that performs the inference function. In some examples, one model deployment process allows only one entity (for example, one access network device) to obtain a model inference result. However, in some scenarios, a plurality of entities require inference and using existing methods, a plurality of model deployment processes are needed for the plurality of entities, resulting in low efficiency.

### SUMMARY

This application provides a model deployment method and a communication apparatus, to help reduce the complexity of deploying a target model for a plurality of entities and improve model deployment efficiency.

According to a first aspect, this application provides a model deployment method. The method may be performed by a second apparatus or a component (for example, a chip or a chip system) in the second apparatus. The second apparatus has a capability of providing a model loading service. The second apparatus may be a network management system, an element management system, a network device, a radio access network device, or any other apparatus or system that can provide the model loading service. This is not specifically limited in this application. The method includes: receiving identification information of a target model and a deployment scope of the target model, where the deployment scope of the target model indicates a plurality of entities that need to use the target model for inference; and deploying the target model based on the identification information of the target model and the deployment scope of the target model.

In an embodiment of this application, information received by the second apparatus includes the deployment scope of the target model, to indicate a plurality of entities that need to use the target model for inference. The second apparatus may deploy, based on the deployment scope, the target model for all or part of the plurality of entities indicated by the deployment scope. In a manner with some examples, in a scenario in which a model needs to be deployed for the plurality of entities, the second apparatus needs to receive the identification information of the target model a plurality of times for the plurality of entities. In comparison with this manner, in the method provided in this application, the deployment scope of the target model is indicated in a model deployment process, so that one model deployment process may correspond to a plurality of entities in the deployment scope that need to use the target model for inference. This reduces the complexity of deploying the target model for the plurality of entities and improves model deployment efficiency.

With reference to the first aspect, in some implementations of the first aspect, the deployment scope of the target model includes one or more of the following: information about a geographical area; identification information of a network area; identification information of a plurality of inference functions; or identification information of a plurality of entities.

It should be understood that the deployment scope of the target model may be a range including a plurality of entities that need to use the target model for inference, and may be a substantive area range, or may be an abstract range. This is not limited in this application.

Optionally, the information about the geographic area may be administrative division information of the geographic area, longitude and latitude information of the geographic area, or the like. This is not limited in this application. It may be understood that there may be a first mapping relationship between the information about the geographic area and an entity that performs the inference function, and the second apparatus may maintain the first mapping relationship. In a possible implementation, the second apparatus may determine, based on the information about the geographic area and the first mapping relationship, a plurality of entities in the geographic area as entities that need to use the target model for inference. Further, the second apparatus may perform subsequent steps on the plurality of determined entities.

Optionally, the identification information of the network area may be identification information of any subnetwork that can distinguish between network areas, such as a local area network, a metropolitan area network, or a wide area network. This is not limited in this application. It may be understood that there may be a second mapping relationship between the identification information of the network area and an entity that performs the inference function, and the second apparatus may maintain the second mapping relationship. In a possible implementation, the second apparatus may determine, based on the identification information of the network area and the second mapping relationship, a plurality of entities that need to use the target model for inference, and further perform subsequent steps on the plurality of determined entities.

In some examples, the entity that performs the inference function may be referred to as an inference function (AIMlInferenceFunction). Optionally, the identification information of the plurality of inference functions may be used to identify a plurality of entities that perform the inference function. For example, a plurality of AIMlInferenceFunction identifiers or one AIMlInferenceFunction list may indicate the deployment scope of the target model.

Optionally, the identification information of the plurality of entities may be any information that can uniquely identify entities, such as internet protocol (internet protocol, IP) addresses or media access control (media access control, MAC) addresses of the plurality of entities. This is not limited in this application. In some examples, the identification information of the plurality of entities may be presented in a form of a list. However, this is not specifically limited in this application.

With reference to the first aspect, in some implementations of the first aspect, deploying the target model based on the identification information of the target model and the deployment scope of the target model includes: sending first information to a target entity, where the first information indicates the target entity to deploy the target model, and the target entity includes all or part of the plurality of entities.

In a possible implementation, the target entity is determined from the deployment scope of the target model by the second apparatus, and the target entity is determined by the second apparatus based on resources and/or capabilities of the plurality of entities.

In another possible implementation, the target entity is specified by the first apparatus, and the target entity is determined by the first apparatus based on resources and/or capabilities of the plurality of entities.

With reference to the first aspect, in some implementations of the first aspect, the target entity includes all of the plurality of entities, and the first information includes the identification information of the target model.

In this embodiment, all the plurality of entities indicated by the deployment scope of the target model are target entities. A manner in which each of the plurality of entities uses the target model for inference may be: performing inference based on the target model deployed by the entity, to obtain an inference result. In this case, the first information sent by the second apparatus to the target entity includes the identification information of the target model, to indicate the target entity to deploy the target model.

With reference to the first aspect, in some implementations of the first aspect, the target entity includes part of the plurality of entities, and the first information includes the identification information of the target model and the deployment scope of the target model.

In this embodiment, the plurality of entities indicated by the deployment scope of the target model include the target entity and another entity different from the target entity. In this case, the target entity may perform inference based on the target model deployed on the target entity, and the another entity may perform inference by using the target model deployed on the target entity.

With reference to the first aspect, in some implementations of the first aspect, when the target entity is specified by the first apparatus, the method further includes: receiving identification information of the target entity.

With reference to the first aspect, in some implementations of the first aspect, the method further includes: sending second information, where the second information indicates that the target model is successfully deployed, and the second information includes the identification information of the target model and the identification information of the target entity.

It should be understood that, after the target model is successfully deployed on the target entity, the second apparatus may notify, by using the second information, a first entity (an entity other than the target entity in the plurality of entities) that the target model is successfully deployed. The identification information of the target model in the second information indicates a model that is successfully deployed, the identification information of the target entity indicates an entity on which the target model is deployed, and the deployment scope of the target model may be used by the target entity to authenticate the first entity.

With reference to the first aspect, in some implementations of the first aspect, the method further includes: sending first identification information and identification information of a first process, where the first identification information is associated with a message that carries the identification information of the target model, there is a mapping relationship between the first identification information and the first process, and the first process is used to manage a deployment process of the target model.

Optionally, the first identification information and the identification information of the first process may be sent via a response message, and the response message may be a response to the message that carries the identification information of the target model. However, this is not limited in this application.

With reference to the first aspect, in some implementations of the first aspect, the method further includes: receiving first indication information, where the first indication information indicates a management mode for the deployment process of the target model.

With reference to the first aspect, in some implementations of the first aspect, the deployment process management mode may be batch management.

"Batch management" may be understood as that target model deployment processes for the plurality of target entities are considered as a whole. In this case, the first process corresponds to an overall deployment process of the target model.

In a possible implementation, the first indication information indicates that the deployment process management mode is batch management. In another possible implementation, the management mode for the deployment process of the target model is batch management by default. When the deployment process management mode is batch management, the first process corresponds to the overall deployment process of the target model.

With reference to the first aspect, in some implementations of the first aspect, the second apparatus may report the overall deployment process of the target model.

In a possible implementation, the second apparatus actively reports a status of the first process, and the method further includes: sending third information, where the third information includes the first identification information and a status of the first process, or the identification information of the first process and the status of the first process, and the status includes: running, canceling, canceled, suspended, or finished.

In another possible implementation, the second apparatus reports the status of the first process in response to a request from the first apparatus. In this case, before the second apparatus sends the third information, the method further includes: receiving, by the second apparatus, a second request from the first apparatus, where the second request is used to request the status of the first process, and the second request includes the first identification information or the identification information of the first process.

With reference to the first aspect, in some implementations of the first aspect, the method further includes: receiving fourth information, where the fourth information is used to control the overall deployment process of the target model, the fourth information includes the first identification information and a control instruction for the first process, or the identification information of the first process and the control instruction, and the control instruction includes cancel, suspend, or start.

In this embodiment of this application, in a model deployment manner of batch management, there may be one first process, and the second apparatus may maintain only one process instance, so that the target model can be deployed on the plurality of target entities, thereby helping the second apparatus manage the model deployment process. In addition, in a process in which the first apparatus and the second apparatus interact with each other to request and report the status of the first process and control the first process, a process of deploying the target model on the plurality of target entities is considered as a whole, without a need to focus on a model deployment process of each target entity, or exchange information about each target entity. This helps reduce signaling overheads between apparatuses, and helps improve deployment efficiency of the target model.

With reference to the first aspect, in some implementations of the first aspect, the management mode for the deployment process of the target model may alternatively be independent management.

"Independent management" may be understood as that an independent process is created for managing a model deployment process of each of the plurality of target entities.

In a possible implementation, the first indication information indicates that the management mode for the deployment process of the target model is independent management by default. In another possible implementation, the deployment process management mode is independent management, and when the deployment process management mode is independent management, the first process includes a plurality of processes, and any one of the plurality of processes corresponds to model deployment for one entity.

With reference to the first aspect, in some implementations of the first aspect, the second apparatus may report statuses of all or part of the plurality of processes.

In a possible implementation, the second apparatus actively reports statuses of all or part of the plurality of processes, and the method further includes: sending fifth information, where the fifth information includes: the first identification information, identification information of entities corresponding to all or part of the plurality of processes, and respective statuses of all or part of the processes; or identification information of all or part of the processes, and the respective statuses of all or part of the processes, where the status includes: running, canceling, canceled, suspended, or finished.

In another possible implementation, the second apparatus reports the statuses of all or part of the plurality of processes to the first apparatus in response to a third request of the first apparatus. Specifically, before the second apparatus sends the fifth information, the second apparatus receives the third request from the first apparatus, where the third request is used to request the statuses of all or part of the plurality of processes, and the third request includes the first identification information, and identification information of entities corresponding to all or part of the plurality of processes, or identification information of all or part of the processes.

With reference to the first aspect, in some implementations of the first aspect, the method further includes: receiving sixth information, where the sixth information is used to control all or part of the plurality of processes, and the sixth information includes: the first identification information, the identification information of the entities corresponding to all or part of the processes, and a control instruction for each of all or part of the processes; or the identification information of all or part of the processes, and the control instruction.

In this embodiment of this application, in a model deployment manner of independent management, the first process may include a plurality of processes, the plurality of processes are in a one-to-one correspondence with identification information of the plurality of target entities, and the plurality of processes respectively correspond to target model deployment processes of the plurality of target entities. In this way, the first apparatus may separately obtain and control a status corresponding to a model deployment process of each target entity. When deployment on some of the plurality of target entities fails, the first apparatus may determine the target entities on which the deployment fails, and may re-deploy the target model for these target entities based on their identification information. This helps improve management accuracy and improve model deployment efficiency.

According to a second aspect, this application further provides a model deployment method. The method may be performed by a first apparatus or a component (for example, a chip or a chip system) in the first apparatus. The first apparatus has a capability of invoking a model loading service. The first apparatus may be a network management system, an element management system, a network device, a radio access network device, or any other apparatus or system that has a capability of invoking the model loading service. This is not specifically limited in this application. The method includes: determining identification information of a target model and a deployment scope of the target model, where the deployment scope of the target model indicates a plurality of entities that need to use the target model for inference; and sending the identification information of the target model and the deployment scope of the target model.

With reference to the second aspect, in some implementations of the second aspect, the deployment scope of the target model includes one or more of the following: information about a geographical area; identification information of a network area; identification information of a plurality of inference functions; or identification information of a plurality of entities.

With reference to the second aspect, in some implementations of the second aspect, the method further includes: sending identification information of a target entity, where the target entity includes part of entities in the plurality of entities, and the target entity is determined based on resources and/or capabilities of the plurality of entities.

With reference to the second aspect, in some implementations of the second aspect, the method further includes: sending first identification information and identification information of a first process, where the first identification information is associated with a message that carries the identification information of the target model, there is a mapping relationship between the first identification information and the first process, and the first process is used to manage a deployment process of the target model.

With reference to the second aspect, in some implementations of the second aspect, the method further includes: receiving first indication information, where the first indication information indicates the management mode for the deployment process of the target model.

With reference to the second aspect, in some implementations of the second aspect, the deployment process management mode is batch management.

With reference to the second aspect, in some implementations of the second aspect, the management mode for the deployment process of the target model is batch management by default.

With reference to the second aspect, in some implementations of the second aspect, the first process corresponds to an overall deployment process of the target model.

With reference to the second aspect, in some implementations of the second aspect, the method further includes: sending third information, where the third information includes the first identification information and a status of the first process, or the identification information of the first process and the status of the first process, and the status includes: running, canceling, canceled, suspended, or finished.

With reference to the second aspect, in some implementations of the second aspect, the method further includes: receiving fourth information, where the fourth information is used to control the overall deployment process of the target model, the fourth information includes the first identification information and a control instruction for the first process, or the identification information of the first process and the control instruction, and the control instruction includes cancel, suspend, or start.

With reference to the second aspect, in some implementations of the second aspect, the management mode for the deployment process of the target model is independent management by default.

With reference to the second aspect, in some implementations of the second aspect, the deployment process management mode is independent management.

With reference to the second aspect, in some implementations of the second aspect, the first process includes a plurality of processes, and any one of the plurality of processes corresponds to model deployment for one entity.

With reference to the second aspect, in some implementations of the second aspect, the method further includes: sending fifth information, where the fifth information includes: the first identification information, identification information of entities corresponding to all or part of the plurality of processes, and respective statuses of all or part of the processes; or identification information of all or part of the processes, and the respective statuses of all or part of the processes, where the status includes: running, canceling, canceled, suspended, or finished.

With reference to the second aspect, in some implementations of the second aspect, the method further includes: receiving sixth information, where the sixth information is used to control all or part of the plurality of processes, and the sixth information includes: the first identification information, the identification information of the entities corresponding to all or part of the processes, and a control instruction for each of all or part of the processes; or the identification information of entities corresponding to all or part of the processes, and the control instruction.

With reference to the second aspect, in some implementations of the second aspect, the identification information of the target model is sent via a request message or a configuration message.

With reference to the second aspect, in some implementations of the second aspect, the deployment scope of the target model is sent via a request message or a configuration message.

According to a third aspect, this application further provides a model deployment method. The method may be performed by a third apparatus or a component (for example, a chip or a chip system) in the third apparatus. The third apparatus has a capability of performing an inference function. The third apparatus may be a network management system, an element management system, a network device, a radio access network device, or another entity, apparatus, or system that can perform the inference function. This is not specifically limited in this application. The method includes: receiving first information, where the first information indicates to deploy a target model, the first information includes a deployment scope of the target model and identification information of the target model, and the deployment scope of the target model indicates a plurality of entities that need to use the target model for inference; and deploying the target model based on the first information.

With reference to the third aspect, in some implementations of the third aspect, the deployment scope of the target model includes one or more of the following: information about a geographical area; identification information of a network area; identification information of a plurality of inference functions; or identification information of a plurality of entities.

With reference to the third aspect, in some implementations of the third aspect, the method further includes: receiving a first request, where the first request is used to request an inference result of the target model, and the first request includes the identification information of the target model and an input parameter of the target model; and obtaining the inference result based on the input parameter by using the target model.

With reference to the third aspect, in some implementations of the third aspect, the method further includes: sending the inference result.

With reference to the third aspect, in some implementations of the third aspect, the method further includes: receiving second information, where the second information indicates that the target model is successfully deployed, and the second information includes the identification information of the target model and identification information of a target entity.

According to a fourth aspect, this application provides a communication apparatus, including a module configured to perform the method according to any one of the first aspect, the second aspect, or the third aspect.

According to a fifth aspect, this application provides another communication apparatus, including a processor. The processor is coupled to a memory, and may be configured to execute instructions in the memory, to implement the method in any one of the possible implementations of the first aspect, the second aspect, or the third aspect. Optionally, the apparatus further includes the memory. Optionally, the apparatus further includes a communication interface, and the processor is coupled to the communication interface.

According to a sixth aspect, this application provides a communication system, including a first apparatus, a second apparatus, and a third apparatus. The second apparatus is configured to perform the method according to any implementation of the first aspect, the first apparatus is configured to perform the method according to any implementation of the second aspect, and the third apparatus is configured to perform the method according to any implementation of the third aspect.

According to a seventh aspect, this application provides a processor, including an input circuit, an output circuit, and a processing circuit. The processing circuit is configured to: receive a signal by using an input circuit, and transmit a signal by using an output circuit, so that the processor performs the method in any one of the possible implementations of the first aspect, the second aspect, or the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, receive a signal by using a receiver, and transmit a signal by using a transmitter, to perform the method in any one of the possible implementations of the first aspect, the second aspect, or the third aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the eighth aspect may be a chip. The processor may be implemented by hardware or software. When the processor is implemented by hardware, the processor may be a logic circuit, an integrated circuit, or the like. When the processor is implemented by software, the processor may be a general-purpose processor, and may be implemented by reading software code stored in the memory. The memory may be integrated into the processor, or may be located outside the processor and exist independently.

According to a ninth aspect, a computer program product is provided, where the computer program product includes a computer program (which may also be referred to as code or instructions). When the computer program is run, a computer is enabled to perform the method in any one of the possible implementations of the first aspect, the second aspect, or the third aspect.

According to a tenth aspect, a computer-readable storage medium is provided, where the computer-readable storage medium stores a computer program (which may also be referred to as code or instructions). When the computer program is run on a computer, the computer is enabled to perform the method in any one of the possible implementations of the first aspect, the second aspect, or the third aspect.

### BRIEF DESCRIPTION OF DRAWINGS

FIG. 1 shows a model workflow according to an embodiment of this application;
FIG. 2 is a working diagram of a network resource model according to an embodiment of this application;
FIG. 3 is a working diagram of a network resource model according to an embodiment of this application;
FIG. 4 is a diagram of a communication system to which an embodiment of this application is applicable;
FIG. 5 is a schematic flowchart of a model deployment method according to an embodiment of this application;
FIG. 6A and FIG. 6B are a schematic flowchart of a model deployment method according to an embodiment of this application;
FIG. 7A and FIG. 7B are a schematic flowchart of another model deployment method according to an embodiment of this application;
FIG. 8A, FIG. 8B, and FIG. 8C are a schematic flowchart of still another model deployment method according to an embodiment of this application;
FIG. 9A, FIG. 9B, and FIG. 9C are a schematic flowchart of yet another model deployment method according to an embodiment of this application;
FIG. 10A, FIG. 10B, and FIG. 10C are a schematic flowchart of a model deployment method according to an embodiment of this application;
FIG. 11 is a block diagram of a communication apparatus according to an embodiment of this application; and
FIG. 12 is a block diagram of another communication apparatus according to an embodiment of this application.

### DESCRIPTION OF EMBODIMENTS

The following describes technical solutions of this application with reference to accompanying drawings.

Before this application is described, the following descriptions are first provided.

First, in embodiments shown below, terms and English acronyms and abbreviations, such as reference data or differential data, are all examples provided for ease of description, and shall not constitute any limitation on this application. This application does not exclude a possibility of defining another term that can implement a same or similar function in an existing or a future protocol.

Second, in the following embodiments, first, second, and various numbering are merely used for distinguishing for ease of description, and are not intended to limit the scope of embodiments of this application.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

To improve intelligence and automation levels of networks, artificial intelligence (artificial intelligence, AI) and machine learning (machine learning, ML) technologies are progressively applied to promote network intelligence.

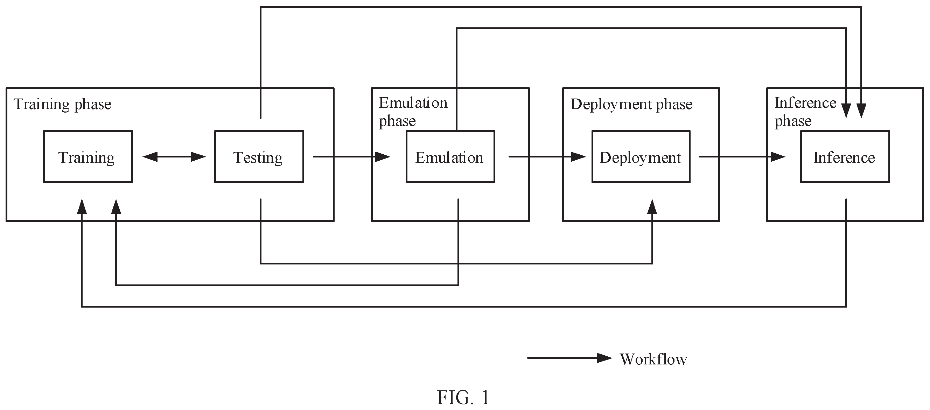

FIG. 1 shows an example of an AI/ML workflow, mainly including a training phase, an emulation phase, a deployment phase, and an inference phase. It should be understood that, generally, the AI/ML workflow is implemented sequentially based on the training phase (training phase), the emulation phase (emulation phase), the deployment phase (deployment phase), and the inference phase (inference phase). However, in some possible implementations, the AI/ML model may perform the inference phase after the training phase and/or the emulation phase, or skip the emulation phase after the training phase to perform the deployment phase and the inference phase, or enter the training phase after the emulation phase or the inference phase. The deployment phase is a process of loading a model to an inference function. In a possible implementation, after the training phase and the emulation phase, the model is loaded to a corresponding inference function through the deployment phase, to enter the inference phase to perform an inference process.

In some examples, a role that provides an ML model loading (ML entity loading) management service (management service, MnS) is referred to as a producer (producer), and a role that invokes the ML entity loading management service is referred to as a consumer (consumer). For the deployment phase, two sub-cases and solutions for the two sub-cases are defined.

The two sub-cases are as follows:
Sub-case 1: The consumer requests the producer to perform model loading (consumer requested ML entity loading).
Sub-case 2: The consumer configures a policy for the producer, and the producer triggers model loading (control of producer-initiated ML entity loading).

Solutions for the two sub-cases:
The current solutions define three information object classes (information object classes, IOCs): MLEntityLoadingRequest, MLEntityLoadingPolicy, and MLEntityLoadingProcess indicating an ML model loading process. MLEntityLoadingRequest and MLEntityLoadingProcess are used in Sub-case 1, and MLEntityLoadingPolicy and MLEntityLoadingProcess are used in Sub-case 2.

The following separately describes attributes of the three information object classes in detail.

### 1. MLEntityLoadingRequest<<IOC>>

MLEntityLoadingRequest<<IOC>> indicates an ML model loading request created by the consumer. The consumer uses this IOC to request the producer to load an ML model to a target inference function. Attributes of this IOC are shown in Table 1.

**Table 1**

| Attribute name (attribute name) | Support qualifier (support qualifier) | isReadable (isReadable) | isWritable (isWritable) |
|---|---|---|---|
| requestStatus | M | T | T |
| cancelRequest | O | T | T |

| Role-related attribute (attribute related to role) | | | |
|---|---|---|---|
| mLEntityToLoadRef | M | T | F |

The requestStatus attribute indicates a status of the request, and a value of the requestStatus attribute may be any one of the following: not started (NOT_STARTED), loading (LOADING_IN_PROGRESS), suspended (SUSPENDED), successfully completed (FINISHED_SUCCESS), completed and failed (FINISHED_FAILED), or canceled (CANCELLED). The cancelRequest attribute indicates whether the consumer cancels an ML entity loading request, and has a value of true (TRUE) or false (FALSE). The role-related attribute mLEntityToLoadRef indicates an identifier of a model needing to be loaded for the ML model loading request created by the consumer.

It should be understood that values of "support qualifier" include mandatory (mandatory, M), optional (optional, O), conditionally optional (condition optional, CO), and conditionally mandatory (conditional mandatory, CM). The value M indicates that the attribute is mandatory. The value O indicates that the attribute is optional. The value CM indicates that the attribute is conditionally mandatory, that is, the attribute is mandatory when a condition is met. The value CO indicates that the attribute is optional when a condition is met. Values of "isReadable" include true (TRUE, T) and false (FALSE, F). When the value is T, it indicates that the attribute is readable; when the value is F, it indicates that the attribute is not readable. Values of "isWritable" also include TRUE and FALSE. When the value is T, it indicates that the attribute is writable; when the value is F, it indicates that the attribute is not writable. This explanation is also applicable to the following tables, and details are not described again.

### 2. MLEntityLoadingPolicy <<IOC>>

MLEntityLoadingPolicy<<IOC>> indicates an ML model loading policy set by the consumer for the producer. The consumer uses this IOC to set, for the producer, a condition for triggering ML model loading. The producer can trigger model loading only when the ML model meets the condition. Attributes of this IOC are shown in Table 2.

**Table 2**

| Attribute name (attribute name) | Support qualifier (support qualifier) | isReadable (isReadable) | isWritable (isWritable) |
|---|---|---|---|
| inferenceType | CM | T | T |
| mLEntityId | CM | T | T |
| policyForLoading | M | T | T |

The inferenceType attribute indicates an inference type of an initial model associated with the ML model loading policy set by the consumer for the producer. This attribute is conditionally mandatory. That is, this attribute is mandatory when a model associated with the ML model loading policy set by the consumer for the producer is an initial training model. It should be understood that the initial training model is a model that is trained for the first time, and no model identifier is allocated to the initial training model. Therefore, the inference type of the initial training model may be used to identify the model.

The mLEntityId attribute indicates an identifier of a retraining model corresponding to the ML model loading policy set by the consumer for the producer. This attribute is conditionally mandatory. That is, this attribute is mandatory when a model associated with the ML model loading policy set by the consumer for the producer is a retraining model. It should be understood that one mLEntityId may uniquely identify a model on which initial training has been performed.

The policyForLoading attribute indicates the ML model loading policy set by the consumer for the producer. The policy may be a series of thresholds. For example, the policy may be that accuracy of an ML model is greater than 90%, or a preset time point or a preset period is reached, or a network performance indicator is lower than a preset threshold (for example, energy efficiency is less than 500 bits per joule).

### 3. MLEntityLoadingProcess<<IOC>>

MLEntityLoadingProcess<<IOC>> indicates an ML model loading process. In a scenario of Sub-case 1, the producer may use this IOC to instantiate one or more ML model loading processes for each ML model loading request of the consumer. In a scenario of Sub-case 2, the producer may use this IOC to instantiate one or more ML model loading processes, and associate the one or more ML model loading processes with the ML model loading policy set by the consumer for the producer. Attributes of this IOC are shown in Table 3.

**Table 3**

| Attribute name (attribute name) | Support qualifier (support qualifier) | isReadable (isReadable) | isWritable (isWritable) |
|---|---|---|---|
| progressStatus | M | T | F |
| cancelProcess | O | T | T |
| suspendProcess | O | T | T |
| resumeProcess | O | T | T |

| Role-related attribute (attribute related to role) | | | |
|---|---|---|---|
| MLEntityLoadingRequestRef | CM | T | F |
| MLEntityLoadingPolicyRef | CM | T | F |
| LoadedMLEntityRef | M | T | F |

The progressStatus attribute indicates a status of the ML model loading process. A value of this attribute may be running (RUNNING), canceling (CANCELLING), suspended (SUSPENDED), finished (FINISHED), or canceled (CANCELLED). The cancelProcess attribute indicates whether the consumer cancels an ML entity loading process, and has a value of true (TRUE) or false (FALSE). The suspendProcess attribute indicates whether the consumer suspends the ML entity loading process, and has a value of TRUE or FALSE. The resumeProcess attribute indicates whether the consumer resumes the ML entity loading process, and has a value of TRUE or FALSE.

The role-related attribute MLEntityLoadingRequestRef indicates a loading request identifier associated with the ML entity loading process. This attribute is mandatory when the ML entity loading process corresponds to the scenario of Sub-case 1. MLEntityLoadingPolicyRef indicates a loading policy identifier associated with the ML entity loading process. This attribute is mandatory when the ML entity loading process corresponds to the scenario of Sub-case 2. LoadedMLEntityRef indicates a model identifier associated with the ML entity loading process.

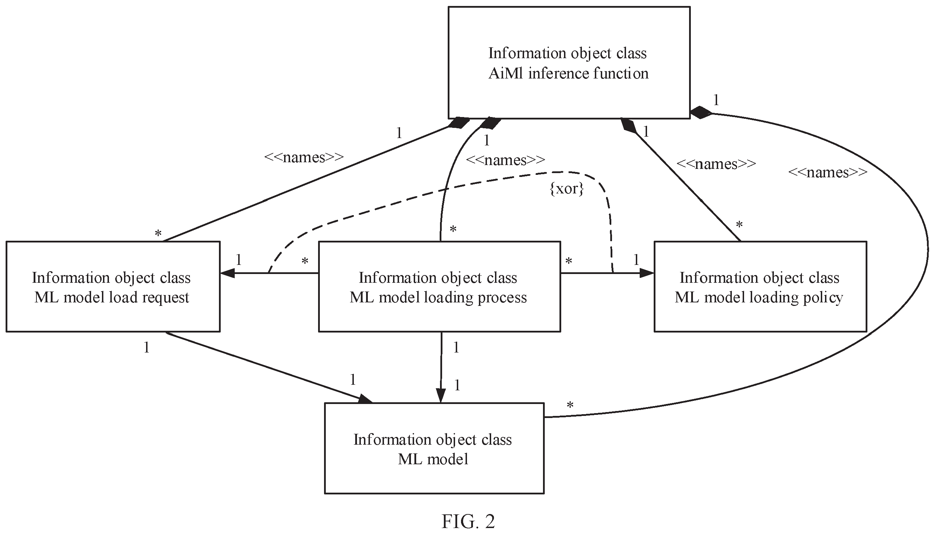

FIG. 2 shows an example of a relationship diagram of a network resource model (network resource model, NRM) including IOCs corresponding to Table 1, Table 2, and Table 3. As shown in FIG. 2, AiMlInferenceFunction indicates a function that can perform ML inference, and is also an IOC. In the figure, connection lines between the MLEntityLoadingRequest, MLEntityLoadingProcess, and MLEntityLoadingPolicy objects and the AiMlInferenceFunction object are solid diamonds on the AiMlInferenceFunction object side. The solid diamond indicates an inclusion relationship. That is, the AiMlInferenceFunction object includes the MLEntityLoadingRequest, MLEntityLoadingProcess, and MLEntityLoadingPolicy objects. Further, connection lines between the MLEntityLoadingRequest and MLEntityLoadingProcess objects and the MLEntity object are arrows on the MLEntity object side, and the arrow is used to represent an association relationship, that is, the MLEntityLoadingRequest and MLEntityLoadingProcess objects are associated with the MLEntity object. Therefore, it may be further understood that the AiMlInferenceFunction object includes the MLEntity object, which is shown in the figure as follows: A connection line between the AiMlInferenceFunction object and the MLEntity object is a solid diamond on the AiMlInferenceFunction object side.

In addition, numbers and symbols for connection lines between objects in the figure represent cardinal number relationships between intent object attributes that have an inclusion relationship and an association relationship. For example, on the connection line between the MLEntityLoadingRequest object and the AiMlInferenceFunction object shown in FIG. 2, a cardinal number on the MLEntityLoadingRequest object side is "*", and a cardinal number on the AiMlInferenceFunction object side is "1"; on the connection line between the MLEntityLoadingRequest object and the MLEntity object, cardinal numbers on both the MLEntityLoadingRequest object side and the MLEntity object side are "1". This indicates that the AiMlInferenceFunction object can include a plurality of MLEntityLoadingRequest objects, and each MLEntityLoadingRequest object can be associated with only one MLEntity object. A connection rule for another connection line in FIG. 2 and a subsequent NRM diagram may also be explained according to the foregoing rule, and details are not described again.

It may be learned from FIG. 2 that the MLEntityLoadingRequest, MLEntityLoadingProcess, and MLEntityLoadingPolicy objects are included in the AiMlInferenceFunction object. For the consumer, an MLEntityLoadingRequest or an MLEntityLoadingPolicy created during a model deployment process is for an inference function (for example, software or an entity that performs the inference function). To be specific, during the model deployment process, there is only one target inference function explicitly or implicitly indicated by the MLEntityLoadingRequest or the MLEntityLoadingPolicy. Therefore, the producer can deploy a model only for the indicated target inference function. If a model needs to be deployed for a plurality of inference functions, the consumer needs to maintain a network resource model relationship shown in FIG. 2 for each inference function. To be specific, an MLEntityLoadingRequest or an MLEntityLoadingPolicy needs to be created for each inference function to implement model deployment, leading to a complex process and low efficiency.

In view of this, this application provides a model deployment method and a communication apparatus. A deployment scope of a target model is indicated in a model deployment process, so that one model deployment process may correspond to a plurality of entities in the deployment scope that need to use the target model for inference. This reduces the complexity of deploying the target model for the plurality of entities and improves model deployment efficiency.

It should be understood that, in this embodiment of this application, the inference function (AiMlInferenceFunction) may be understood as an entity that performs the inference function, for example, a base station. To avoid ambiguity, in subsequent descriptions, the term "entity" is used to represent the inference function. Details are not described again.

The following first describes, in detail, design for IOCs proposed in this application.
1. The following attributes are added to a model loading request object created by a consumer:
   Attribute 1: indicating a deployment scope of a target model corresponding to the model loading request created by the consumer, where the deployment scope may indicate a plurality of entities that need to use the target model for inference.
   Attribute 2: indicating a management mode in a target model deployment process, for example, may be batch management or independent management.
   Attribute 3: indicating an entity that is specified by the consumer and that actually requires deployment of the target model.

For example, the model loading request created by the consumer may be represented by MLEntityLoadingRequest<<IOC>>. Table 4 shows an example of attributes included in MLEntityLoadingRequest<<IOC>> provided in this embodiment of this application.

**Table 4**

| Attribute name (attribute name) | Support qualifier (support qualifier) | isReadable (isReadable) | isWritable (isWritable) |
|---|---|---|---|
| requestStatus | M | T | T |
| cancelRequest | O | T | T |
| infFuncBatchIndicator | O | T | T |

| Role-related attribute (attribute related to role) | | | |
|---|---|---|---|
| mLEntityToLoadRef | M | T | F |
| aIMlInferenceFunctionRef | CO | T | F |
| aIMlInferenceFunctionToLoadMlEntityRef | CO | T | F |

In a possible implementation, the foregoing attribute 1 may be the role-related attribute aIMlInferenceFunctionRef, and the attribute may be a conditionally optional attribute. For example, the attribute is optional when the model loading request created by the consumer is for entities in a specific range. For example, when the deployment scope is a geographic area, optionally, a specific inference function list in the geographic area may be further specified, to select a portion of inference functions specified in the geographic area, or may not be specified, and in this case, all inference functions within a geographical area range are selected. The attribute 2 may be infFuncBatchIndicator, and the attribute is an optional attribute. A value of infFuncBatchIndicator may indicate the management mode in the model deployment process, for example, batch management is performed on a model deployment process of a plurality of entities, or independent management is performed on a model deployment process of each entity. It should be understood that representation forms of the attribute 1 and the attribute 2 are not specifically limited in this embodiment of this application.

In a possible implementation, the foregoing attribute 3 may be the role-related attribute aIMlInferenceFunctionToLoadMlEntityRef, and the attribute may be a conditionally optional attribute. For example, the attribute is optional when the model loading request created by the consumer indicates to deploy the target model for a portion of inference functions in the deployment scope. A value of the attribute may indicate identifiers of a portion of inference functions specified by the consumer. However, this is not specifically limited in this application.

2. The following attributes are added to a model loading policy object set by the consumer for a producer:
Attribute 4: indicating a deployment scope of the target model corresponding to the model loading policy set by the consumer for the producer, where the deployment scope may indicate a plurality of entities that need to use the target model for inference.

Attribute 5: indicating an entity that is specified by the consumer and that actually requires deployment of the target model.

For example, the model loading policy set by the consumer for the producer may be represented by MLEntityLoadingPolicy<<IOC>>. Table 5 shows an example of attributes included in MLEntityLoadingPolicy<<IOC>> provided in this embodiment of this application.

**Table 5**

| Attribute name (attribute name) | Support qualifier (support qualifier) | isReadable (isReadable) | isWritable (isWritable) |
|---|---|---|---|
| inferenceType | CM | T | T |
| mLEntityId | CM | T | T |
| policyForLoading | M | T | T |

| Role-related attribute (attribute related to role) | | | |
|---|---|---|---|
| aIMlInferenceFunctionRef | CO | T | F |
| aIMlInferenceFunctionToLoadMlEntityRef | CO | T | F |

In a possible implementation, the foregoing attribute 4 may be the role-related attribute aIMlInferenceFunctionRef, and the attribute may be a conditional optional attribute. For example, the attribute is optional when the model loading policy set by the consumer for the producer is for entities in a specific range. It should be understood that the attribute 4 may alternatively be represented in another form. This is not limited in this application.

In a possible implementation, the foregoing attribute 5 may be ImlInferenceFunctionToLoadMlEntityRef, and the attribute may be a conditionally optional attribute. For example, the attribute is optional when the model loading policy set by the consumer for the producer includes deploying the target model for some inference functions in the deployment scope of the target model. A value of the attribute may indicate identifiers of some inference functions specified by the consumer. However, this is not limited in this application.

In a possible implementation, a model loading process object may be represented by using MLEntityLoadingProcess<<IOC>>, and attributes included in MLEntityLoadingProcess<<IOC>> may be shown in Table 3. However, this is not limited in this application.

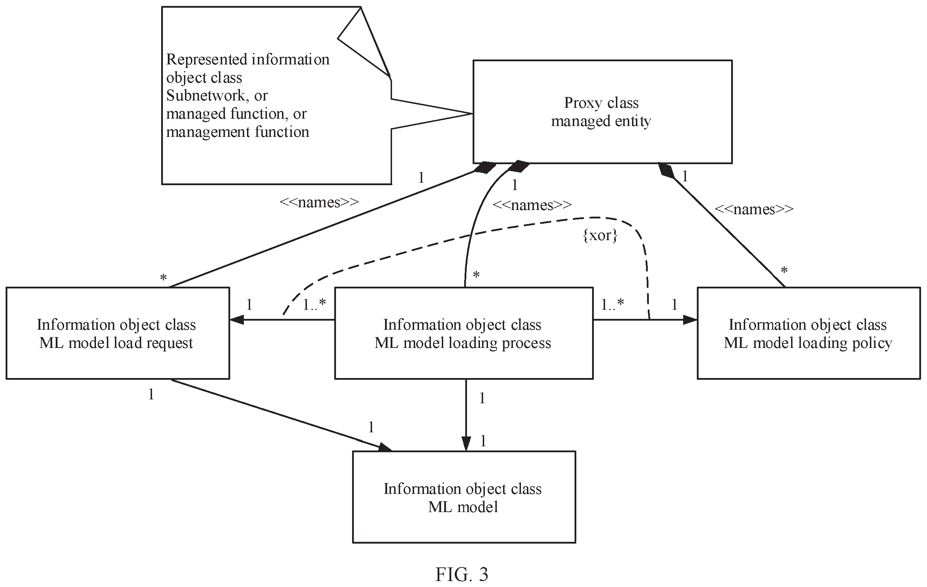

FIG. 3 is an example of a relationship diagram of a network resource model according to an embodiment of this application. Compared with FIG. 2, MLEntityLoadingRequest, MLEntityLoadingProcess, and MLEntityLoadingPolicy objects are no longer included in an AiMlInferenceFunction object, but in a ManagedEntity object. The ManagedEntity object is a proxy class (ProxyClass).

For example, the ManagedEntity may represent one or more of the following: a group of managed entities, which may be represented by a network area, for example, a subnetwork (Subnetwork), which may include a group of base stations; a group of managed functions (ManagedFunction), for example, a communication function implemented by software running on dedicated hardware, or a communication function implemented by software running on a network functions virtualization infrastructure (network functions virtualization infrastructure, NFVI), which may be a virtual network function of a base station or a core network; or a group of managed management functions (ManagementFunction), for example, an inference function (AI/ML inference function), which may also be understood as an executor of the inference function.

In addition, on an arrow line from the MLEntityLoadingProcess object to the MLEntityLoadingPolicy object and an arrow line from the MLEntityLoadingProcess object to the MLEntityLoadingRequest object, both cardinal numbers close to the MLEntityLoadingProcess object are changed from "*" (shown in FIG. 2) to "1..*", indicating that there may be at least one MLEntityLoadingProcess object associated with one MLEntityLoadingPolicy object, and there may also be at least one MLEntityLoadingProcess object associated with one MLEntityLoadingRequest object.

It should be understood that, based on the network resource model shown in FIG. 3, one MLEntityLoadingRequest or one MLEntityLoadingPolicy created by the consumer in the model deployment process may not be specific to only one entity (for example, one AiMlInferenceFunction shown in FIG. 2), but may be specific to a plurality of entities (for example, ManagedEntity shown in FIG. 3).

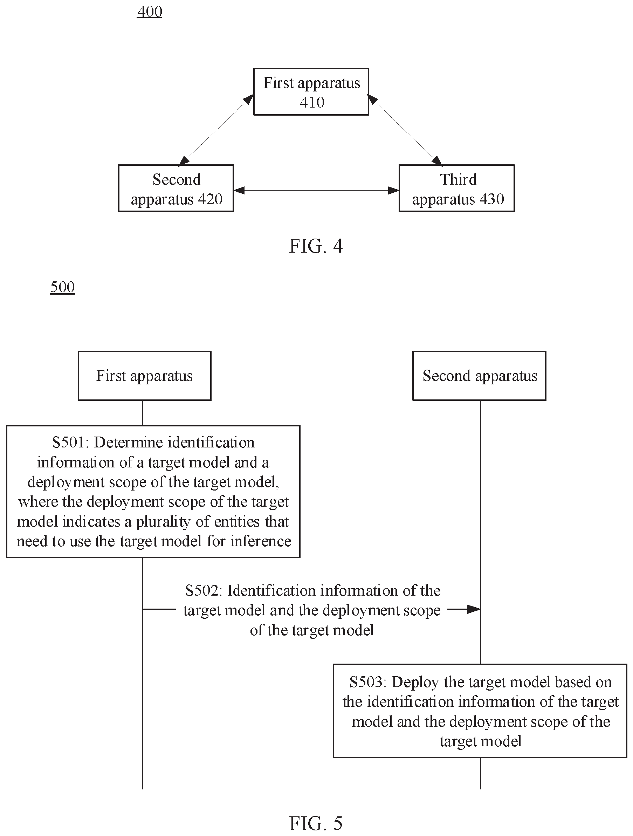

FIG. 4 is a diagram of a communication system 400 applicable to an embodiment of this application. As shown in FIG. 4, the communication system 400 includes a first apparatus 410, a second apparatus 420, and a third apparatus 430. Communication may be established between the first apparatus 410, the second apparatus 420, and the third apparatus 430.

In a possible implementation, a role of the first apparatus 410 may be a model loading consumer (ML loading consumer) that may invoke a model loading service, a role of the second apparatus 420 may be a model loading producer (ML loading producer) that may provide the model loading service, and the third apparatus 430 may be a role that implements inference function (ML inference) based on a model (which may also be understood as an executor of an inference function, an inference function executor, or an inference result obtainer. In some implementations, the role may be directly referred to as an inference function). However, this is not specifically limited in this application.

It should be understood that in the communication system shown in FIG. 4, there may be one or more first apparatuses and one or more second apparatuses, and there may be a plurality of third apparatuses. This is not limited in this application.

In a possible scenario, the first apparatus 410 may invoke the model loading service provided by the second apparatus 420, to indicate to load the target model to the specified third apparatus 430, and the third apparatus 430 is responsible for inputting data into the model to obtain a corresponding output.

In a possible implementation, the first apparatus 410 (or the second apparatus 420, or the third apparatus 430) may include one or more of the following: a module that can implement a function corresponding to the model loading consumer, a module that can implement a function corresponding to the model loading producer, or a module that can implement an inference function based on a model. This is not specifically limited in this application.

Optionally, the first apparatus 410 may be a network management system (network management system, NMS), an element management system (element management system, EMS), a radio access network (radio access network, RAN) device, or any other apparatus or system that can be used as the model loading consumer. This is not specifically limited in this application.

Optionally, the second apparatus 420 may be a network management system, an element management system, or a radio access network device, or any other apparatus or system that may be used as the model loading producer. This is not specifically limited in this application.

Optionally, the third apparatus 430 may be a network management system, an element management system, a radio access network device, or any other apparatus or system that can implement the inference function based on a model. This is not specifically limited in this application.

Optionally, the element management system may manage a network and be responsible for network running, management, and function maintenance, and may also be referred to as a cross-domain management system. This is not limited in this application.

Optionally, the element management system may be configured to manage one or more network elements of a specific type, and may also be referred to as a domain management system or a single-domain management system. This is not limited in this application.

Optionally, the access network device may be a transmission reception point (transmission reception point, TRP), or may be an evolved NodeB (evolved NodeB, eNB, or eNodeB) in a long term evolution (long term evolution, LTE) system, or may be a home NodeB (for example, a home evolved NodeB, or a home NodeB, HNB), a baseband unit (base band unit, BBU), or a radio controller in a cloud radio access network (cloud radio access network, CRAN) scenario. Alternatively, the access network device may be a relay station, an access point, an in-vehicle device, a wearable device, an access network device in a 5G network, an access network device in a future evolved public land mobile communication network (public land mobile network, PLMN) network, or the like, may be an access point (access point, AP) in a wireless local area network (wireless local area network, WLAN), may be a gNB in a new radio (new radio, NR) system, or may be a satellite base station in a satellite communication system, or the like. This is not limited in embodiments of this application.

Optionally, the access network device may include a central unit (central unit, CU) node, a distributed unit (distributed unit, DU) node, an access network device including a CU node and a DU node, or an access network device including a CU-control plane node (CU-CP node), a CU-user plane node (CU-UP node), and a DU node. The access network device including the CU node and the DU node may split protocol layers of the access network device, functions of a portion of the protocol layers are controlled by the CU in a centralized manner, functions of a portion or all of remaining protocol layers are distributed in the DU, and the CU controls the DU in a centralized manner. In an implementation, a CU deployment protocol stack includes a radio resource control (radio Resource Control, RRC) layer, a data convergence protocol (packet data convergence protocol, PDCP) layer, and a service data adaptation protocol (service data adaptation protocol, SDAP) layer. A DU deployment protocol stack includes a radio link control (radio link control, RLC) layer, a media access control (media access control, MAC) layer, and a physical layer (physical layer, PHY). Therefore, the CU has RRC, PDCP, and SDAP processing capabilities. The DU has RLC, MAC, and PHY processing capabilities. The foregoing function division is merely an example, and does not constitute a limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different functional entities. The CU-CP and the CU-UP may be coupled to the DU to jointly implement a function of an access network device. In a possible manner, the CU-CP is responsible for a control plane function, and mainly includes RRC and PDCP-C. PDCP-C is mainly responsible for encryption and decryption of control plane data, integrity protection, data transmission, and the like. The CU-UP is responsible for a user plane function, mainly including SDAP and PDCP-U. The SDAP is mainly responsible for processing data of a core network device and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP indicates that the access network device is connected to the core network device through an interface between the core network device and the access network device, and is connected to the DU through F1-C (control plane). The CU-UP is connected to the DU through F1-U (user plane). In addition, in another possible implementation, the PDCP-C is also in the CU-UP. This is not limited in this application.

To make the objectives and technical solutions of this application clearer and more intuitive, the following describes, in detail with reference to accompanying drawings and embodiments, a model deployment method and a communication apparatus provided in embodiments of this application. It should be understood that specific embodiments described herein are merely used to explain this application but are not intended to limit this application.

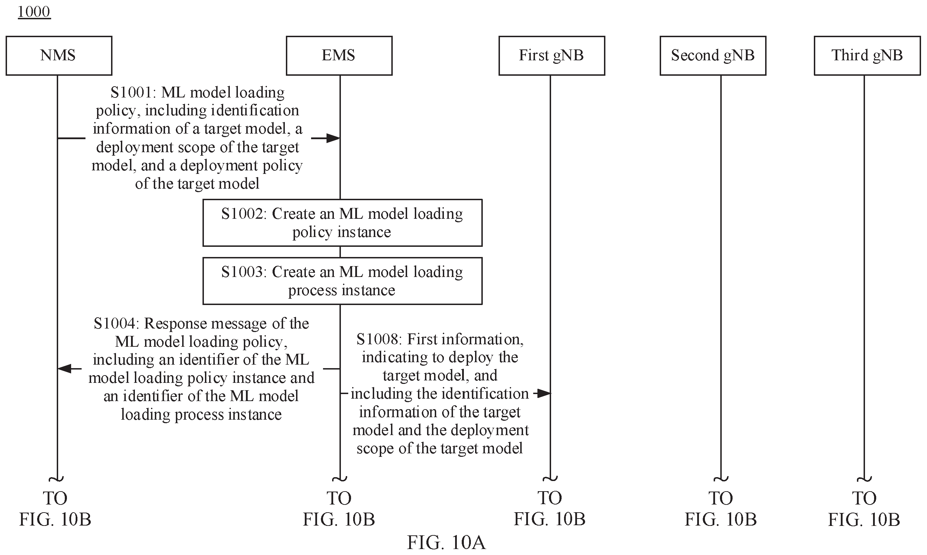

The following first describes, in detail with reference to FIG. 5 to FIG. 10C, a model deployment method provided in an embodiment of this application.

The model deployment method provided in this embodiment of this application may be implemented based on design for IOCs provided in this application. The method may be applied to the communication system 400 shown in FIG. 4 or another communication system. This is not limited in this application. For example, in this embodiment of this application, the model deployment method provided in this application is described from a perspective of interaction between apparatuses by using an example in which a role of a first apparatus is a consumer and a role of a second apparatus is a producer.

FIG. 5 is a schematic flowchart of a model deployment method 500 according to an embodiment of this application. The method 500 includes the following steps.

S501: A first apparatus determines identification information of a target model and a deployment scope of the target model, where the deployment scope of the target model indicates a plurality of entities that need to use the target model for inference.

It should be noted that the model in this application may be a machine learning model (machine learning model, ML model), or may be represented in a form of an entity, for example, a machine learning entity (machine learning entity, ML entity). This is not limited in this application.

S502: The first apparatus sends the identification information of the target model and the deployment scope of the target model. Correspondingly, a second apparatus receives the identification information of the target model and the deployment scope of the target model.

S503: The second apparatus deploys the target model based on the identification information of the target model and the deployment scope of the target model.

It should be noted that, that the second apparatus deploys the target model is that the second apparatus loads the target model to one or more target inference functions corresponding to the deployment scope, where the target model is used to perform inference.

In this embodiment of this application, information sent by the first apparatus to the second apparatus includes the deployment scope of the target model, to indicate a plurality of entities that need to use the target model for inference. The second apparatus may deploy, based on the deployment scope sent by the first apparatus, the target model for all or part of the plurality of entities indicated by the deployment scope. In a manner with some examples, in a scenario in which a model needs to be deployed for the plurality of entities, the first apparatus needs to send the identification information of the target model to the second apparatus a plurality of times for the plurality of entities. In comparison with this manner, in the method provided in this application, the deployment scope of the target model is indicated in a model deployment process, so that one model deployment process may correspond to a plurality of entities in the deployment scope that need to use the target model for inference. This reduces the complexity of deploying the target model for the plurality of entities and improves model deployment efficiency.

In an optional embodiment, the deployment scope of the target model in S501 may be indicated by using one or more of the following: information about a geographical area; identification information of a network area; identification information of a plurality of inference functions; or identification information of a plurality of entities.

It should be understood that the deployment scope of the target model may be a range including a plurality of entities that need to use the target model for inference, and may be a substantive area range, or may be an abstract range. This is not limited in this application.

Optionally, the information about the geographic area may be administrative division information of the geographic area, longitude and latitude information of the geographic area, or the like. This is not limited in this application. It may be understood that there may be a first mapping relationship between the information about the geographic area and an entity that performs the inference function, and the first apparatus and/or the second apparatus may maintain the first mapping relationship. In a possible implementation, the second apparatus may determine, based on the information about the geographic area indicated by the first apparatus and the first mapping relationship, a plurality of entities in the geographic area as entities that need to use the target model for inference. Further, the second apparatus may perform subsequent steps on the plurality of determined entities.

Optionally, the identification information of the network area may be identification information of any subnetwork that can distinguish between network areas, such as a local area network, a metropolitan area network, or a wide area network. This is not limited in this application. It may be understood that there may be a second mapping relationship between the identification information of the network area and an entity that performs the inference function, and the first apparatus and/or the second apparatus may maintain the second mapping relationship. In a possible implementation, the second apparatus may determine, based on the identification information of the network area indicated by the first apparatus and the second mapping relationship, a plurality of entities that need to use the target model for inference, and further perform subsequent steps on the plurality of determined entities.

In some examples, the entity that performs the inference function may be referred to as an inference function (AIMlInferenceFunction). Optionally, the identification information of the plurality of inference functions may be used to identify a plurality of entities that perform the inference function. For example, a plurality of AIMlInferenceFunction identifiers or one AIMlInferenceFunction list may indicate the deployment scope of the target model.

Optionally, the identification information of the plurality of entities may be any information that can uniquely identify entities, such as internet protocol (internet protocol, IP) addresses or media access control (media access control, MAC) addresses of the plurality of entities. This is not limited in this application. In some examples, the identification information of the plurality of entities may be presented in a form of a list. However, this is not specifically limited in this application.

In an optional embodiment, a possible implementation of S503 includes: The second apparatus sends first information to a target entity, where the first information indicates the target entity to deploy the target model.

It should be understood that the deployment scope of the target model indicates a plurality of entities that need to use the target model for inference. In this embodiment of this application, the target entity may be understood as an entity on which the target model is actually deployed, and the target entity may include all or part of the plurality of entities indicated by the deployment scope of the target model.

In a possible implementation, the target entity is determined from the deployment scope of the target model by the second apparatus, and the target entity is determined by the second apparatus based on resources and/or capabilities of the plurality of entities.

In another possible implementation, the target entity is specified by the first apparatus. In this case, before the second apparatus sends the first information to the target entity, the method further includes: The first apparatus sends identification information of the target entity to the second apparatus, where the target entity is determined by the first apparatus based on resources and/or capabilities of the plurality of entities. Correspondingly, the second apparatus receives the identification information of the target entity.

In a possible scenario, the target entity includes all of the plurality of entities, and the first information includes the identification information of the target model.

In this scenario, all the plurality of entities indicated by the deployment scope of the target model are target entities. A manner in which each of the plurality of entities uses the target model for inference may be: performing inference based on the target model deployed by the entity, to obtain an inference result. In this case, the first information sent by the second apparatus to the target entity includes the identification information of the target model, to indicate the target entity to deploy the target model.

In some examples, the target model is already stored in the target entity, and the second apparatus sends the first information to the target entity, where the first information includes the identification information of the target model, to indicate the target entity to deploy the target model. That the second apparatus indicates the target entity to deploy the target model may be understood as that the second apparatus indicates the target entity to activate the target model.

In some other examples, if the target model is not stored in the target entity, that the second apparatus sends the first information to the target entity to indicate the target entity to deploy the target model may be understood as that the second apparatus indicates the target entity to download and activate the target model. In some implementations, the first information further includes a storage address of the target model, and the target entity downloads the target model based on the storage address. In some other implementations, the target entity maintains a correspondence between the identification information of the target model and a storage address of the target model, and the target entity may find and obtain the storage address based on the identification information of the target model included in the first information, and download the target model based on the storage address.

In another possible scenario, the target entity includes part of the plurality of entities, and the first information includes the identification information of the target model and the deployment scope of the target model.

In this scenario, the plurality of entities indicated by the deployment scope of the target model include the target entity and another entity different from the target entity. In this case, the target entity may perform inference by using the target model deployed on the target entity, and the another entity may perform inference by using the target model deployed on the target entity.

In a possible implementation, an example in which the another entity is a first entity is used. A manner in which the another entity may perform inference by using the target model deployed on the target entity includes: The first entity sends a first request to the target entity, where the first request is used to request an inference result of the target model, and the first request includes the identification information of the target model and an input parameter of the target model. Correspondingly, the target entity receives the first request, and when determining that the first entity belongs to the deployment scope of the target model, obtains the inference result based on the input parameter by using the target model that has been deployed on the target entity. Further, the target entity sends the inference result to the first entity, and correspondingly, the first entity receives the inference result.

In a possible implementation, before the first entity sends the first request to the target entity, the method further includes: The second apparatus sends second information to the first entity, where the second information indicates that the target model is successfully deployed, and the second information includes the identification information of the target model and the identification information of the target entity. Correspondingly, the first entity receives the second information.

It should be understood that, after the target model is successfully deployed on the target entity, the second apparatus may notify, by using the second information, the first entity that the target model is successfully deployed. The identification information of the target model in the second information indicates a model that is successfully deployed, and the identification information of the target entity indicates an entity on which the target model is deployed.

In an optional embodiment, after S502, the method 500 further includes: The second apparatus sends first identification information and identification information of a first process, where the first identification information is associated with a message that carries the identification information of the target model, there is a mapping relationship between the first identification information and the first process, and the first process is used to manage a deployment process of the target model. Correspondingly, the first apparatus receives the first identification information and the identification information of the first process.

Optionally, the first identification information and the identification information of the first process may be sent via a response message, and the response message may be a response to the message that carries the identification information of the target model. However, this is not limited in this application.

It should be understood that this embodiment of this application is applicable to scenarios corresponding to the two sub-cases defined for the model deployment phase mentioned above. In different scenarios, the identification information of the target model may be carried through different types of messages. Therefore, the first identification information has different meanings in different scenarios.

Scenario 1: Scenario corresponding to Sub-case 1 mentioned above. In a possible implementation of this scenario, the identification information of the target model in S501 is sent by the first apparatus through a request message.

In a possible implementation, the request message is used to request the second apparatus to deploy the target model for the plurality of entities indicated by the deployment scope of the target model. This may correspond to the foregoing described case in which the target entity includes all of the plurality of entities.

In another possible implementation, the request message is used to request the second apparatus to deploy the target model for some of the plurality of entities indicated by the deployment scope of the target model. This may correspond to the foregoing described case in which the target entity includes some of the plurality of entities.

Optionally, the deployment scope of the target model sent by the first apparatus to the second apparatus in S501 may also be sent via a request message. The deployment scope of the target model and the identification information of the target model may be sent via a same request message, or may be sent by using different request messages. This is not limited in this application.

It should be understood that, in this scenario, the first apparatus determines, based on a deployment policy of the target model, an occasion for sending the request message to the second apparatus. The deployment policy may be a requirement on an inference capability of the target model, or may be a parameter and the like of each functional entity related in the model deployment process. The deployment policy may be determined by the first apparatus, or may be reported by an entity that needs to use the target model for inference. This is not limited in this application. For example, the deployment policy may be that accuracy of the target model is greater than 90%, or a preset time point or a preset period for deploying the target model is reached in terms of time, or a network performance indicator of an entity is detected to be lower than a preset threshold (for example, energy efficiency is less than 500 bits per joule). This is not specifically limited in this application.

In a possible implementation, when the first apparatus determines that the target model meets a condition corresponding to the deployment policy, and/or all or part of the entities indicated by the deployment scope of the target model meet a deployment condition, the first apparatus sends a request message to the second apparatus, where the request message is used to request to deploy the target model, and the request message includes the identification information of the target model and the deployment scope of the target model. Correspondingly, the second apparatus receives the request message, and creates an instance of the request message and an instance of the first process.

It should be understood that the first process is used to manage a deployment process of the target model, and the first process may be referred to as a deployment process of the target model or a loading process of the target model. A specific name of the first process is not specifically limited in this application. In addition, "loading" and "deployment" described in embodiments of this application may be understood as a same meaning unless otherwise specified, and are not repeatedly explained again.

For example, in this scenario, the request message may correspond to the MLEntityLoadingRequest object designed in this application, and attributes of the MLEntityLoadingRequest object may be shown in Table 4.

Optionally, a value of the role-related attribute aIMlInferenceFunctionRef of the MLEntityLoadingRequest object may indicate the deployment scope of the target model, and a value of the role-related attribute mLEntityToLoadRef of the MLEntityLoadingRequest object may indicate the identification information of the target model corresponding to the request message. However, this is not specifically limited in this application.

Correspondingly, the first process may be a process created based on the MLEntityLoadingProcess object shown in Table 3, the request message may be represented by using a value of the role-related attribute MLEntityLoadingRequestRef of the MLEntityLoadingProcess object, and the identification information of the target model associated with the first process may be represented by using a value of the role-related attribute LoadedMLEntityRef of the MLEntityLoadingProcess object.

In the foregoing Scenario 1, the instance of the request message may be an MLEntityLoadingRequest instance, the first identification information may be an identifier of the MLEntityLoadingRequest instance, the instance of the first process may be an MLEntityLoadingProcess instance, and the identification information of the first process may be an identifier of the MLEntityLoadingProcess instance.

Scenario 2: Scenario corresponding to Sub-case 2 mentioned above. In a possible implementation of this scenario, the identification information of the target model in S501 is sent by the first apparatus through a configuration message, and the configuration message further includes a deployment policy of the target model.

In a possible implementation, the first apparatus sends the identification information of the target model and the deployment policy of the target model to the second apparatus by using the configuration message. After receiving the identification information of the target model and the deployment policy of the target model, the second apparatus creates an instance of the configuration message, and creates an instance of the first process after determining that the target model meets a condition corresponding to the deployment policy and/or all or part of entities indicated by the deployment scope of the target model meet a deployment condition.

Optionally, the deployment scope of the target model sent by the first apparatus to the second apparatus in S501 may also be sent via a configuration message. The deployment scope of the target model, the identification information of the target model, and the deployment strategy of the target model may be sent via a same configuration message or through a plurality of configuration messages. A quantity, content, and an order of configuration messages are not limited in this application.

Optionally, the deployment policy of the target model in this scenario may be that accuracy of the target model is greater than 90%, or a preset time point or a preset period for deploying the target model is reached in terms of time, or a network performance indicator of a third apparatus is detected to be lower than a preset threshold (for example, energy efficiency is less than 500 bits per joule). This is not specifically limited in this application.

For example, in this scenario, the configuration message may correspond to an MLEntityLoadingPolicy object designed in this application, and attributes of the MLEntityLoadingPolicy object may be shown in Table 5.

Optionally, a value of the role-related attribute aIMlInferenceFunctionRef of the MLEntityLoadingPolicy object may indicate the deployment scope of the target model, a value of the attribute policyForLoading may indicate the deployment policy of the target model, or a value of the attribute inferenceType or a value of the attribute mLEntityId may indicate the identification information of the target model. However, this is not limited in this application.

Correspondingly, the first process may be a process created based on the MLEntityLoadingProcess object shown in Table 3, the configuration message may be identified by using a value of the role-related attribute MLEntityLoadingPolicyRef of the MLEntityLoadingProcess object, and the identification information of the target model associated with the first process may be represented by using a value of the role-related attribute LoadedMLEntityRef of the MLEntityLoadingProcess object.

In the foregoing Scenario 2, the instance of the configuration message may be an MLEntityLoadingPolicy instance, the first identification information may be an identifier of the MLEntityLoadingPolicy instance, the instance of the first process may be an MLEntityLoadingProcess instance, and the identification information of the first process may be an identifier of the MLEntityLoadingProcess instance.

The first process in both the foregoing two scenarios is used to manage a deployment process of the target model. When there are a plurality of target entities on which the target model needs to be deployed, a process management mode for deploying the target model for the target entity may include two manners: "batch management" and "independent management". However, this is not specifically limited in this application. In different deployment process management modes, meanings of the first process are different. The following uses "batch management" and "independent management" as examples for detailed description.

### Manner 1: batch management

"Batch management" may be understood as that target model deployment processes for the plurality of target entities are considered as a whole. In this case, the first process corresponds to an overall deployment process of the target model. For example, the second apparatus creates an MLEntityLoadingProcess instance to manage a process of deploying the target model for the plurality of target entities.

It should be understood that the MLEntityLoadingProcess instance has a status attribute progressStatus, and a value of the attribute may be any one of the following: running (RUNNING), canceling (CANCELLING), suspended (SUSPENDED), finished (FINISHED), or canceled (CANCELLED). When a value of progressStatus of the MLEntityLoadingProcess instance is running (RUNNING), it may be understood that a model deployment process is in progress. Therefore, RUNNING may also be understood as "deploying" or "loading". This is not limited in this application.

For example, when creating the MLEntityLoadingProcess instance, or after creating the MLEntityLoadingProcess instance, the second apparatus may send the first information to the target entity when a value of progressStatus of the MLEntityLoadingProcess instance is RUNNING.

Optionally, the second apparatus may report a status of the first process to the first apparatus.

When the deployment process management mode is batch management, there may be one first process, and the first process corresponds to an overall process of deploying a model for the plurality of target entities.

In a possible implementation, the second apparatus may actively report the status of the first process to the first apparatus. The method further includes: The second apparatus sends third information, where the third information includes the first identification information and the status of the first process, or the identification information of the first process and the status of the first process. Correspondingly, the first apparatus receives the third information.

It should be understood that the third information is used to report the status of the first process, and the first identification information is associated with a message that carries the identification information of the target model, and has a mapping relationship with the first process. Therefore, the second apparatus may identify the first process by using the first identification information or the identification information of the first process. The status of the first process may include: running, canceling, canceled, suspended, or finished.

In another possible implementation, the second apparatus may report the status of the first process to the first apparatus in response to a second request of the first apparatus. Specifically, before the second apparatus sends the third information, the second apparatus receives the second request from the first apparatus, where the second request is used to request the status of the first process, and the second request includes the first identification information or the identification information of the first process.

Optionally, the first apparatus may control the first process. In a possible implementation, the method further includes: The first apparatus sends fourth information, where the fourth information is used to control the overall process of deploying the target model on the plurality of target entities, the fourth information includes the first identification information and a control instruction for the first process, or the identification information of the first process and the control instruction, and the control instruction includes cancel, suspend, or start. Correspondingly, the second apparatus receives the fourth information.

In this embodiment of this application, in a model deployment manner of batch management, there may be one first process, and the second apparatus may maintain only one MLEntityLoadingProcess instance, so that the target model can be deployed on the plurality of target entities, thereby helping the second apparatus manage the model deployment process. In addition, in a process in which the first apparatus and the second apparatus interact with each other to request and report the status of the first process and control the first process, a process of deploying the target model on the plurality of target entities is considered as a whole, without a need to focus on a model deployment process of each target entity, or exchange information about each target entity. This helps reduce signaling overheads between apparatuses, and helps improve deployment efficiency of the target model.

### Second mode: independent management

"Independent management" may be understood as that an independent process is created for managing a model deployment process of each of the plurality of target entities. In this case, the first process includes a plurality of processes, any one of the plurality of processes corresponds to a model deployment process of one target entity, and the identification information of the first process includes a plurality of pieces of identification information corresponding to the plurality of processes. For example, the second apparatus creates a plurality of MLEntityLoadingProcess instances to manage deployment processes of the target model, and the plurality of MLEntityLoadingProcess instances respectively correspond to the model deployment processes of the target entities.

In a case in which the deployment process management mode is independent management, when the second apparatus reports the status of the first process to the first apparatus, the second apparatus may identify, by using the first identification information and identification information of a specific entity in the target entities, a target model deployment process corresponding to the entity, or may identify a target model deployment process of a target entity by using identification information of a specific process in the plurality of processes.

In a possible implementation, the second apparatus actively sends fifth information, where the fifth information is used to report statuses of all or part of the plurality of processes, and the fifth information includes: the first identification information, identification information of entities corresponding to all or part of the plurality of processes, and respective statuses of all or part of the processes; or identification information of all or part of the processes, and the respective statuses of all or part of the processes.

In another possible implementation, the second apparatus may report the statuses of all or part of the plurality of processes to the first apparatus in response to a third request of the first apparatus. Specifically, before the second apparatus sends the fifth information, the second apparatus receives the third request from the first apparatus, where the third request is used to request the statuses of all or part of the plurality of processes, and the third request includes the first identification information, and identification information of entities corresponding to all or part of the plurality of processes, or identification information of all or part of the processes.

Optionally, the first apparatus may control, based on a control instruction, the plurality of processes included in the first process. In a possible implementation, the method further includes: The first apparatus sends sixth information, where the sixth information is used to control all or part of the plurality of processes, and the sixth information includes: the first identification information, the identification information of the entities corresponding to all or part of the processes, and a control instruction for each of all or part of the processes; or the identification information of all or part of the processes, and the control instruction.

In this embodiment of this application, in a model deployment manner of independent management, the first process may include a plurality of processes, the plurality of processes are in a one-to-one correspondence with identification information of the plurality of target entities, and the plurality of processes respectively correspond to target model deployment processes of the plurality of target entities. In this way, the first apparatus may separately obtain and control a status corresponding to a model deployment process of each target entity. When deployment on some target entities in the plurality of target entities fails, the first apparatus may determine the target entities on which the deployment fails, and may re-deploy the target model for these target entities based on their identification information. This helps improve management accuracy and improve model deployment efficiency.

In a possible implementation, the management mode for the deployment process of the target model is a default manner, and the default manner includes batch management or independent management, that is, no explicit indication needs to be provided by either party. Optionally, the deployment process management mode may be agreed on in a protocol. This is not limited in this application.

In another possible implementation, the management mode for the deployment process of the target model is indicated by the first apparatus. An implementation may be as follows: The first apparatus sends first indication information to the second apparatus, where the first indication information indicates the management mode for the deployment process of the target model.

Optionally, the first indication information may be represented by using a value of the attribute infFuncBatchIndicator. In the foregoing Scenario 1, the first indication information may be indicated by using the value of an attribute infFuncBatchIndicator of the MLEntityLoadingRequest object. However, this is not limited in this application.

Optionally, values of infFuncBatchIndicator for the first indication information may include 0 and 1. When the value is 0, it indicates that the management mode for the deployment process of the target model is batch management. When the value is 1, it indicates that the management mode for the deployment process of the target model is independent management. The values of infFuncBatchIndicator and meanings of the values are not specifically limited in this application.

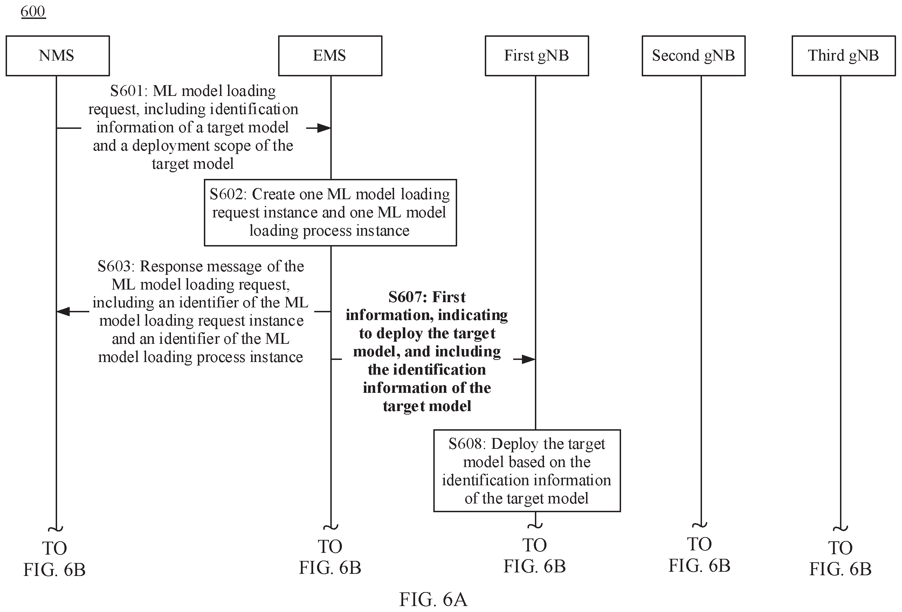

The following gives detailed description with reference to FIG. 6A to FIG. 10C for the two scenarios, namely, Scenario 1 and Scenario 2, the two deployment process management modes, namely, batch management and independent management, and the two cases: the target entity includes all of the plurality of entities, and the target entity includes some of the plurality of entities.

For ease of understanding, in descriptions of FIG. 6A to FIG. 10C an example in which an entity is a gNB, a plurality of entities include a first gNB, a second gNB, and a third gNB, the first apparatus in FIG. 5 is an NMS, and the second apparatus is an EMS is used for description. It should be understood that a quantity of entities is merely used as an example, and does not constitute a limitation on this application.

Case 1: Scenario 1 + Target entity including all of a plurality of entities + Batch management

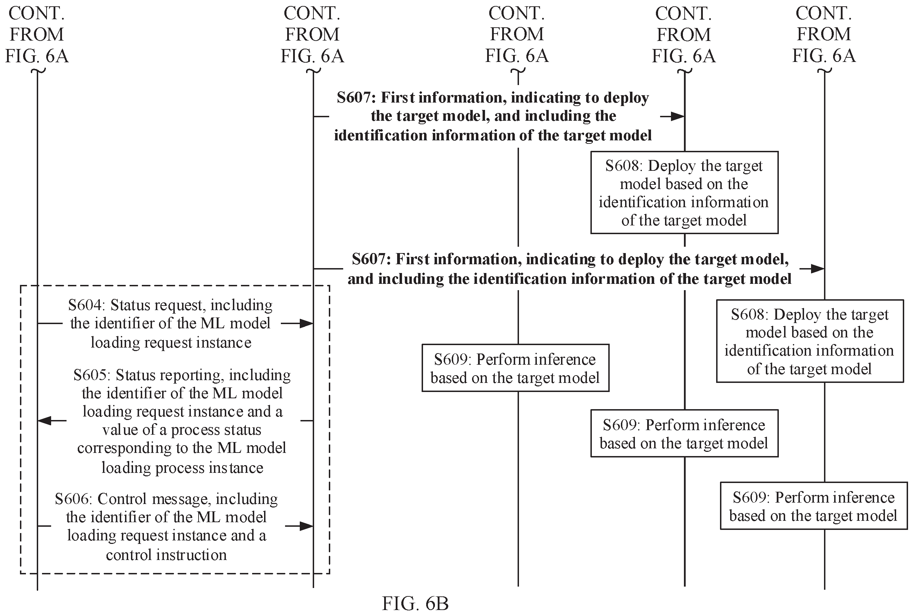

FIG. 6A and FIG. 6B are a schematic flowchart of a model deployment method 600 according to an embodiment of this application. The method 600 includes the following steps.

S601: When determining that a deployment policy of a target model is met, an NMS sends an MLEntityLoadingRequest to an EMS, where the MLEntityLoadingRequest includes identification information of the target model and a deployment scope of the target model. Correspondingly, the EMS receives the MLEntityLoadingRequest.

Optionally, a value of the role-related attribute aIMlInferenceFunctionRef of the MLEntityLoadingRequest object shown in Table 4 may indicate the deployment scope of the target model, and a value of the role-related attribute mLEntityToLoadRef of the MLEntityLoadingRequest object may indicate the identification information of the target model. However, this is not specifically limited in this application.

For example, in this embodiment, the deployment scope of the target model indicates that entities that need to use the target model for inference are a first gNB, a second gNB, and a third gNB. It should be understood that a quantity of entities presented in this embodiment is merely used as an example for description, and does not constitute a limitation on this application. The quantity of entities in this application may be larger or smaller.

S602: The EMS creates one MLEntityLoadingRequest instance and one MLEntityLoadingProcess instance.

It should be understood that the MLEntityLoadingProcess instance created by the EMS in S602 corresponds to model deployment processes of the first gNB, the second gNB, and the third gNB. To be specific, processes of deploying the target model for the first gNB, the second gNB, and the third gNB are considered as a whole, and are managed by using one process.

It should be further understood that a management mode for the deployment process of the target model may be default, or may be indicated by the NMS. In a case of indication by the NMS, indication information may be indicated by using infFuncBatchIndicator included in the MLEntityLoadingRequest. In this embodiment, the infFuncBatchIndicator indicates that the management mode for the deployment process of the target model is batch management.

S603: The EMS sends a response message of the MLEntityLoadingRequest to the NMS, where the response message includes an identifier of the MLEntityLoadingRequest instance and an identifier of the MLEntityLoadingProcess instance. Correspondingly, the NMS receives the response message.

S604: The NMS sends a deployment process status request of the target model to the EMS, where the deployment process status request includes the identifier of the MLEntityLoadingRequest instance. Correspondingly, the EMS receives the request.

In another implementation of S604, the deployment process status request of the target model sent by the NMS to the EMS includes the identifier of the MLEntityLoadingProcess instance.

S605: The EMS reports a deployment process status of the target model to the NMS, where the deployment process status includes the identifier of the MLEntityLoadingRequest instance and a value of progressStatus corresponding to the MLEntityLoadingProcess instance. Correspondingly, the NMS receives the deployment process status of the target model.

In another implementation of S605, the EMS reports the deployment process status of the target model to the NMS, where the deployment process status includes the identifier of the MLEntityLoadingProcess instance and a value of progressStatus corresponding to the MLEntityLoadingProcess instance.

S606: The NMS sends a control message for a deployment process of the target model to the EMS, where the control message includes the identifier of the MLEntityLoadingRequest instance and a control instruction. Correspondingly, the EMS executes the control instruction.

In another implementation of S606, the NMS sends a control message for a deployment process of the target model to the EMS, where the control message includes the identifier of the MLEntityLoadingProcess instance and a control instruction.

S607: The EMS sends first information to the first gNB, the second gNB, and the third gNB, where the first information indicates to deploy the target model, and the first information includes the identification information of the target model. Correspondingly, the first gNB, the second gNB, and the third gNB receive the first information.

Optionally, the EMS may send the first information to the first gNB, the second gNB, and the third gNB in a unicast manner, or in a broadcast manner. This is not limited in this application.

It should be understood that S607 may be understood as a process in which the EMS performs model deployment and loads the target model to the first gNB, the second gNB, and the third gNB.

S608: The first gNB, the second gNB, and the third gNB deploy the target model based on the identification information of the target model.

It should be understood that deploying the target model by the gNB in S608 may be understood as a process in which the gNB activates the target model.

S609: The first gNB, the second gNB, and the third gNB perform inference based on the target model.

It should be understood that, when the first gNB, the second gNB, and the third gNB need to use the target model for inference, they separately perform S609.

It should be further understood that S604, S605, and S606 are all optional steps.

In this embodiment of this application, the MLEntityLoadingRequest includes the deployment scope of the target model, to indicate that the current model deployment is model deployment of a plurality of gNBs. In a model deployment manner of batch management, the EMS maintains only one MLEntityLoadingProcess instance, so that the target model can be deployed on the plurality of gNBs, thereby help the EMS manage the model deployment process. In addition, in an interaction process in which the NMS requests a process status of the MLEntityLoadingProcess instance from the EMS, controls a process of the MLEntityLoadingProcess instance, or the EMS reports the process status of the MLEntityLoadingProcess instance to the NMS, the interaction process needs to be performed for only one instance. This facilitates management, helps reduce signaling overheads between interaction bodies, and helps improve deployment efficiency of the target model.

Case 2: Scenario 1 + Target entity including all of a plurality of entities + Independent management

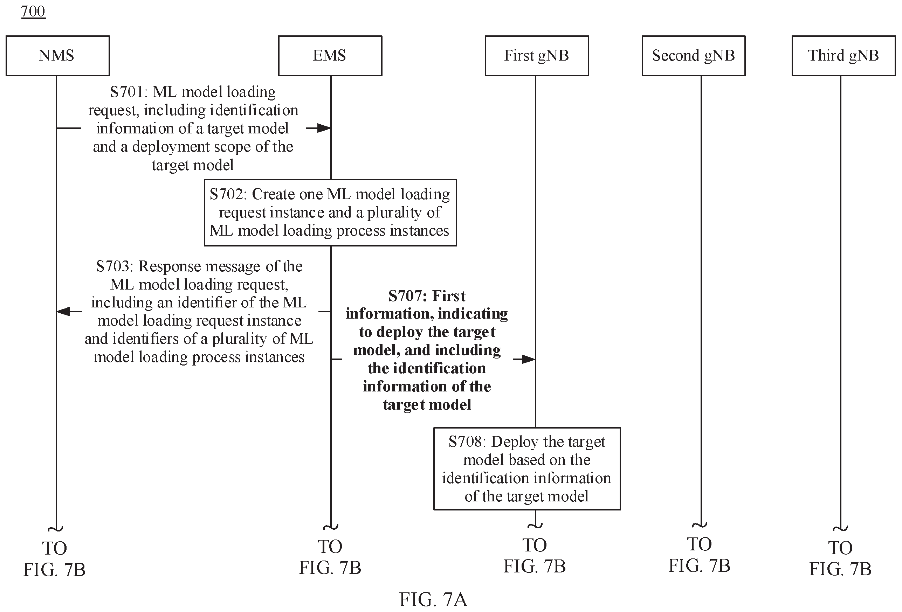

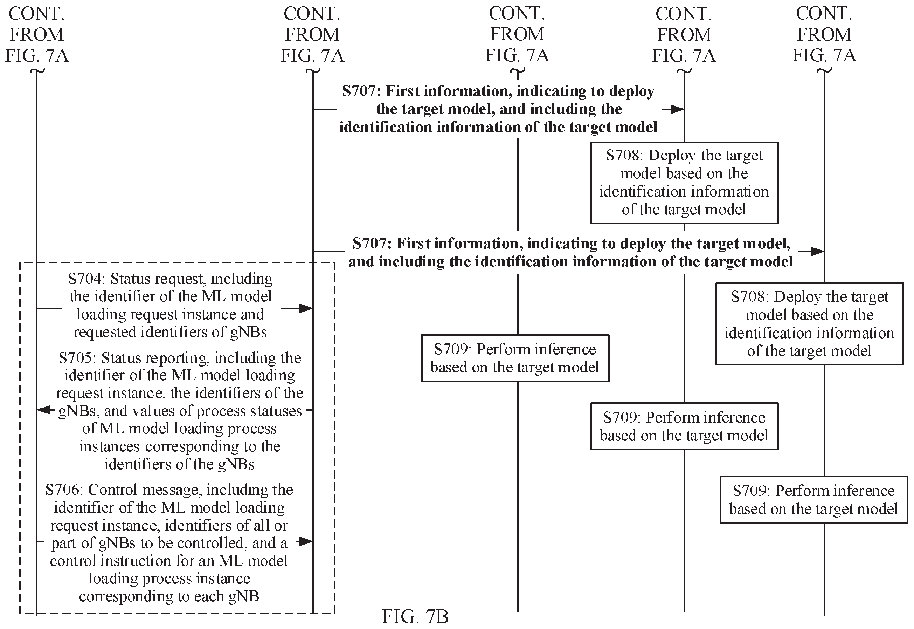

FIG. 7A and FIG. 7B are a schematic flowchart of a model deployment method 700 according to an embodiment of this application. The method 700 includes the following steps.

S701: When determining that a deployment policy of a target model is met, an NMS sends an MLEntityLoadingRequest to an EMS, where the MLEntityLoadingRequest includes identification information of the target model and a deployment scope of the target model. Correspondingly, the EMS receives the MLEntityLoadingRequest.

It should be understood that manners of representing the identification information of the target model and the deployment scope of the target model in the method 700 may be the same as those in the foregoing method 600. Details are not described herein again.

S702: The EMS creates one MLEntityLoadingRequest instance and a plurality of MLEntityLoadingProcess instances.

It should be understood that the plurality of MLEntityLoadingProcess instances respectively correspond to processes for deploying the target model for a first gNB, a second gNB, and a third gNB. For example, there are three MLEntityLoadingProcess instances.

It should be further understood that a management mode for the deployment process of the target model may be default, or may be indicated by the NMS. In a case of indication by the NMS, indication information may be indicated by using infFuncBatchIndicator included in the MLEntityLoadingRequest. In this embodiment, the infFuncBatchIndicator indicates that the management mode for the deployment process of the target model is independent management.

S703: The EMS sends a response message of the MLEntityLoadingRequest to the NMS, where the response message includes an identifier of an MLEntityLoadingRequest instance and a plurality of identifiers corresponding to a plurality of MLEntityLoadingProcess instances. Correspondingly, the NMS receives the response message.

S704: The NMS sends, to the EMS, a status request for MLEntityLoadingProcess instances respectively corresponding to all or part of the plurality of gNBs, where the status request includes the identifier of the MLEntityLoadingRequest instance and requested identifiers of all the gNBs or the part of gNBs. Correspondingly, the EMS receives the request.

In another implementation of S704, a status request, sent by the NMS to the EMS, for MLEntityLoadingProcess instances respectively corresponding to all or part of the plurality of gNBs includes identifiers of the MLEntityLoadingProcess instances respectively corresponding to all or the part of the plurality of gNBs.

S705: The EMS reports, to the NMS, statuses of the MLEntityLoadingProcess instances respectively corresponding to all or the part of the plurality of gNBs, including the identifier of the MLEntityLoadingRequest instance, the identifiers of all the gNBs or the part of gNBs, and values of progressStatus of the MLEntityLoadingProcess instances corresponding to all the gNBs or the part of gNBs. Correspondingly, the NMS receives the statuses of the MLEntityLoadingProcess instances respectively corresponding to all or the part of the plurality of gNBs.

In another implementation of S705, the EMS reports, to the NMS, statuses of the MLEntityLoadingProcess instances respectively corresponding to all or the part of the plurality of gNBs, including the identifiers of the MLEntityLoadingProcess instances corresponding to all the gNBs or the part of gNBs and values of progressStatus of MLEntityLoadingProcess instances corresponding to all or part of target gNBs.

S706: The NMS sends a control message for a target model deployment process of all or the part of the plurality of target gNBs to the EMS, where the control message includes the identifier of the MLEntityLoadingRequest instance, identifiers of all or part of gNBs to be controlled, and a control instruction for an MLEntityLoadingProcess instance corresponding to each gNB. Correspondingly, the EMS executes the control instruction.

In another implementation of S706, the NMS sends a control message for a target model deployment process of all or the part of the plurality of gNBs to the EMS, where the control message includes identifiers of MLEntityLoadingProcess instances corresponding to all the gNBs or the part of gNBs and a control instruction for an MLEntityLoadingProcess instance corresponding to each gNB.

S707: The EMS separately sends first information to the first gNB, the second gNB, and the third gNB, where the first information indicates to deploy the target model, and the first information includes the identification information of the target model. Correspondingly, the first gNB, the second gNB, and the third gNB receive the first information.

Optionally, the EMS may send the first information to the first gNB, the second gNB, and the third gNB in a unicast manner, or in a broadcast manner. This is not limited in this application.

S708: The first gNB, the second gNB, and the third gNB deploy the target model based on the identification information of the target model.

S709: The first gNB, the second gNB, and the third gNB perform inference based on the target model.

It should be further understood that S704, S705, and S706 are all optional steps.

In this embodiment of this application, target model deployment processes of the plurality of gNBs are used for independent management. The NMS may obtain and control process statuses corresponding to target model deployment of all or the part of the plurality of gNBs. When model deployment on some of the plurality of gNBs fails, the NMS may determine the gNBs on which the deployment fails, and then deploy the target model for these gNBs. This helps improve management accuracy.

Case 3: Scenario 1 + Target entity including a portion of a plurality of entities, with a quantity of the portion of entities being one.

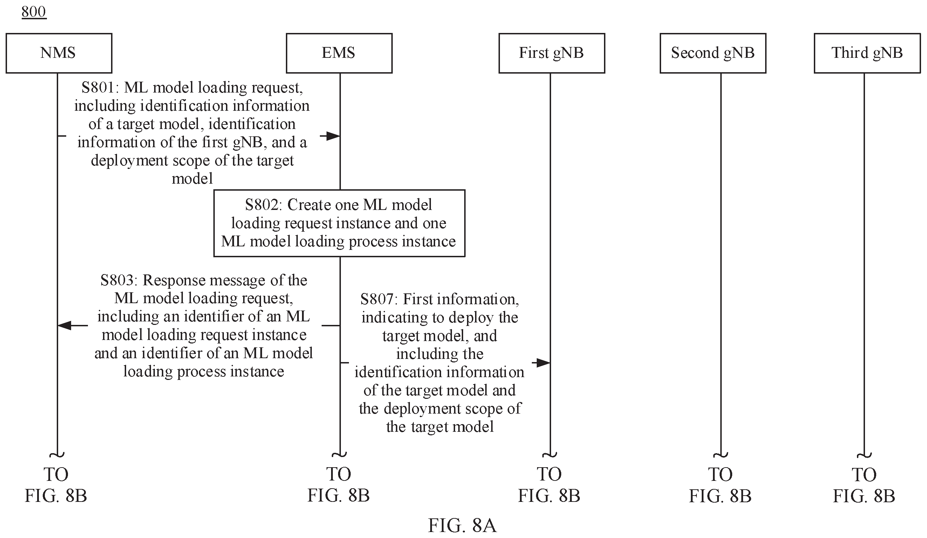

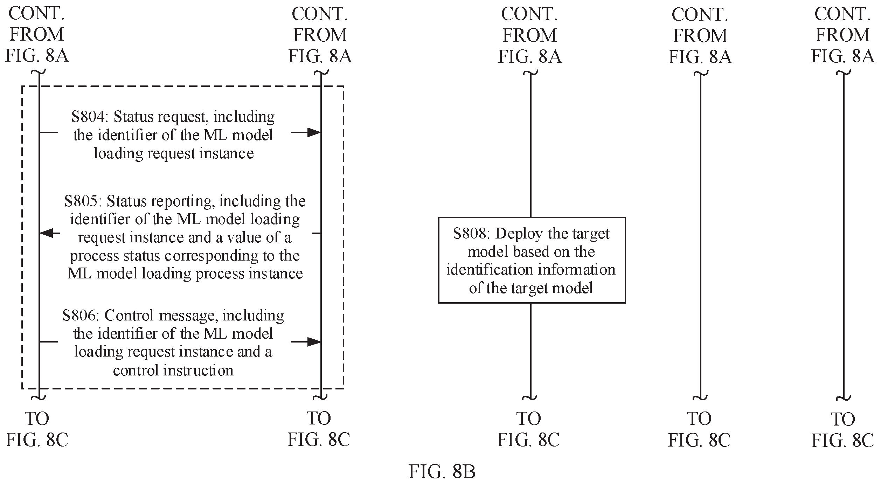

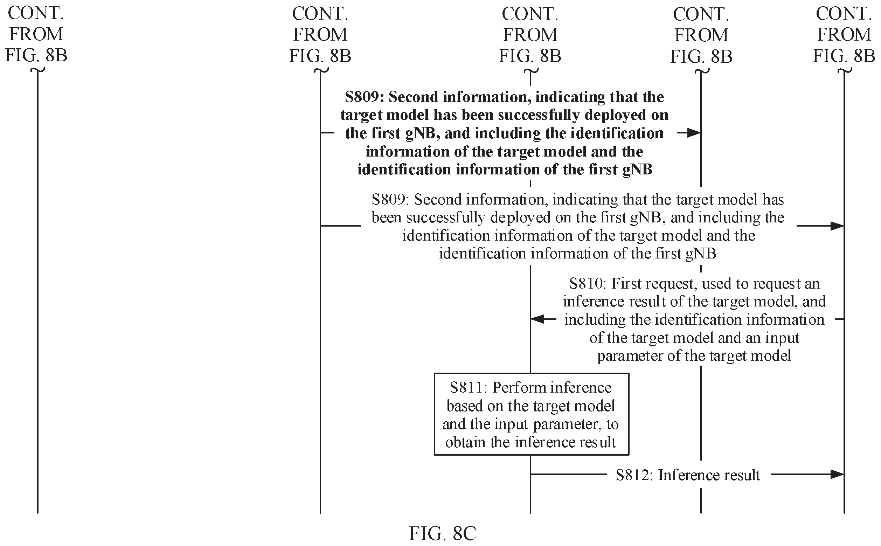

An example in which a target model is deployed on a first gNB is used. FIG. 8A, FIG. 8B, and FIG. 8C are a schematic flowchart of a model deployment method 800 according to an embodiment of this application. The method 800 includes the following steps.

S801: When determining that a deployment policy of the target model is met, an NMS sends an MLEntityLoadingRequest to an EMS, where the MLEntityLoadingRequest includes identification information of the target model, identification information of the first gNB, and a deployment scope of the target model. Correspondingly, the EMS receives the MLEntityLoadingRequest.

Optionally, the identification information of the first gNB may alternatively be an identifier of an inference function (AIMlInferenceFunction) corresponding to the first gNB. This is not limited in this application.

Optionally, a value of the role-related attribute aIMlInferenceFunctionRef of the MLEntityLoadingRequest object shown in Table 4 may indicate the deployment scope of the target model, a value of the role-related attribute mLEntityToLoadRef of the MLEntityLoadingRequest object may indicate the identification information of the target model, and a value of the attribute aIMlInferenceFunctionToLoadMlEntityRef may indicate the identification information of the first gNB. However, this is not specifically limited in this application.

It should be understood that in this embodiment, the MLEntityLoadingRequest includes the identification information of the first gNB, and the MLEntityLoadingRequest indicates the EMS to deploy a target inference model for the first gNB. In addition, a second gNB and a third gNB in the deployment scope of the target model are allowed to use the target model for inference.

Optionally, the first gNB is determined based on resources and/or capabilities of a plurality of gNBs in the deployment scope of the target model. The NMS may query the plurality of gNBs for respective resources and capabilities of the plurality of gNBs, and the plurality of gNBs may alternatively actively report their resources and capabilities. This is not limited in this application.

In a possible implementation, a rule for determining a target gNB by the NMS may be that the first gNB has more inference resources than another gNB, the first gNB has a faster inference speed than another gNB, the first gNB has lower inference energy consumption than another gNB, an average inference result transmission delay of the first gNB in a preset time period is shorter than that of another gNB, or the like. This is not limited in this application.

S802: The EMS creates one MLEntityLoadingRequest instance and one MLEntityLoadingProcess instance.

It should be understood that, in this embodiment, the MLEntityLoadingProcess instance created by the EMS is a model deployment process instance of the first gNB indicated by the NMS in S601.

S803: The EMS sends a response message of the MLEntityLoadingRequest to the NMS, where the response message includes an identifier of the MLEntityLoadingRequest instance and an identifier of the MLEntityLoadingProcess instance. Correspondingly, the NMS receives the response message.

S804: The NMS sends a deployment process status request of the target model to the EMS, where the deployment process status request includes the identifier of the MLEntityLoadingRequest instance. Correspondingly, the EMS receives the request.

In another implementation of S804, the deployment process status request of the target model sent by the NMS to the EMS includes the identifier of the MLEntityLoadingProcess instance.

S805: The EMS reports a deployment process status of the target model to the NMS, where the deployment process status includes the identifier of the MLEntityLoadingRequest instance and a value of progressStatus corresponding to the MLEntityLoadingProcess instance. Correspondingly, the NMS receives the deployment process status of the target model.

In another implementation of S805, the EMS reports the deployment process status of the target model to the NMS, where the deployment process status includes the identifier of the MLEntityLoadingProcess instance and a value of progressStatus corresponding to the MLEntityLoadingProcess instance.

S806: The NMS sends a control message for a deployment process of the target model to the EMS, where the control message includes the identifier of the MLEntityLoadingRequest instance and a control instruction. Correspondingly, the EMS executes the control instruction.

In another implementation of S806, the NMS sends a control message for a deployment process of the target model to the EMS, where the control message includes the identifier of the MLEntityLoadingProcess instance and a control instruction.

S807: The EMS sends first information to the first gNB, where the first information indicates to deploy the target model, and the first information includes the identification information of the target model and the deployment scope of the target model. Correspondingly, the first gNB receives the first information.

It should be understood that the identification information of the target model indicates to deploy the target model, and the deployment scope of the target model indicates that any gNB belonging to the deployment scope can use the target model deployed on the first gNB.

S808: The first gNB deploys the target model based on the identification information of the target model.

It should be understood that deploying the target model by the first gNB in S808 may be understood as a process in which the first gNB activates the target model. The EMS may track, by using the MLEntityLoadingProcess instance created in S802, the progress of activating the target model by the first gNB, and perform S809 when or after the first gNB activates the target model.

S809: The EMS sends second information to the second gNB and the third gNB, where the second information indicates that the target model has been successfully deployed on the first gNB, and the second information includes the identification information of the target model and the identification information of the first gNB. Correspondingly, the second gNB and the third gNB receive the second information.

Optionally, a manner in which the first gNB performs inference by using the target model may be as follows: The first gNB performs inference by using the target model that has been deployed on the first gNB.

Optionally, a manner in which the second gNB or the third gNB or both perform inference by using the target model may be as follows: The second gNB performs inference by using the target model deployed on the first gNB, and/or the third gNB performs inference by using the target model deployed on the first gNB. However, this is not limited in this application. For example, a process in which the third gNB performs inference by using the target model deployed on the first gNB may be shown in S810 to S812.

S810: The third gNB sends a first request to the first gNB, where the first request is used to request an inference result of the target model, and the first request includes the identification information of the target model and an input parameter of the target model. Correspondingly, the first gNB receives the first request.

It should be understood that the input parameter of the target model included in the first request sent by the third gNB to the first gNB may be a parameter of a cell served by the third gNB. This is not limited in this application.

S811: The first gNB performs inference based on the target model and the input parameter, to obtain the inference result.

It should be understood that when determining that the third gNB belongs to the deployment scope of the target model, the first gNB inputs the input parameter of the target model included in the first request into the target model that has been deployed on the first gNB, to perform inference, thereby obtaining the inference result.

S812: The first gNB sends the inference result to the third gNB.

It should be understood that a process in which the second gNB performs inference by using the target model deployed on the first gNB is similar to S810 to S812, and details are not described again.

It should be further understood that S804, S805, and S806 may be optional steps.

In this embodiment of this application, the target model is deployed on the first gNB in the deployment scope of the target model, so that all gNBs in the deployment scope can perform inference by using the target model. This helps improve flexibility of model deployment and model use, and reduce unnecessary resource waste.

Case 4: Scenario 1 + Target entity including a portion of a plurality of entities, with a quantity of the portion of entities greater than one.

In this case, a deployment process of the target model may still include batch management and independent management, and may specifically include the following two types:
(1) In a case of batch management, for a deployment process of the target model, refer to the foregoing method 600. A difference lies in that in S601, the MLEntityLoadingRequest sent by the NMS to the EMS further includes identifiers of the first gNB, the second gNB, and the third gNB, to indicate to deploy the target model on the first gNB, the second gNB, and the third gNB, the deployment scope of the target model may further include a fourth gNB, and the target model is not deployed on the fourth gNB. For a process in which the fourth gNB performs inference by using the target model, refer to S810 to S812 in the method 800. The fourth gNB may request the inference result from any one of the first gNB, the second gNB, and the third gNB on which the target model has been deployed. This is not limited in this application.
(2) In a case of independent management, for a deployment process of the target model, refer to the foregoing method 700. A difference lies in that in S701, the MLEntityLoadingRequest sent by the NMS to the EMS further includes identifiers of the first gNB, the second gNB, and the third gNB, to indicate to deploy the target model on the first gNB, the second gNB, and the third gNB, the deployment scope of the target model may further include a fourth gNB, and the target model is not deployed on the fourth gNB. For a process in which the fourth gNB performs inference by using the target model, refer to S810 to S812 in the method 800. The fourth gNB may request the inference result from any one of the first gNB, the second gNB, and the third gNB on which the target model has been deployed. This is not limited in this application.

Case 5: Scenario 2 + Target entity including all of a plurality of entities + Independent management

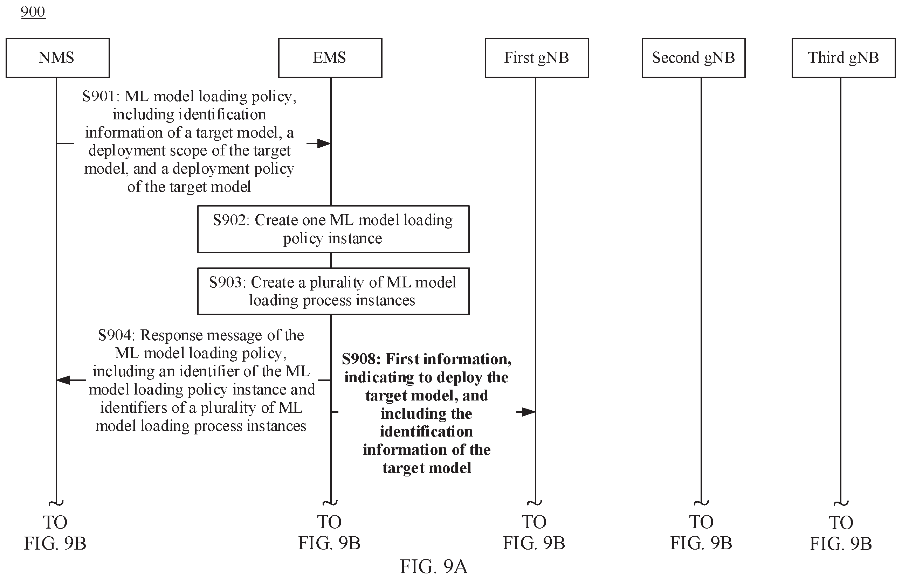

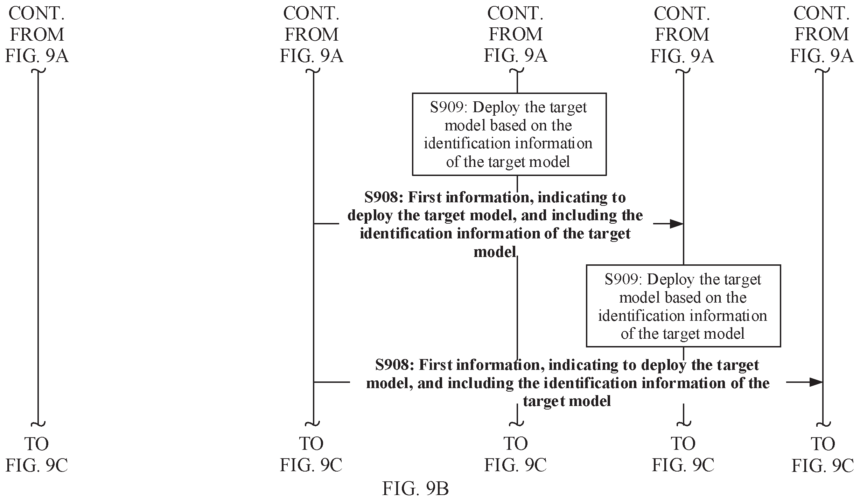

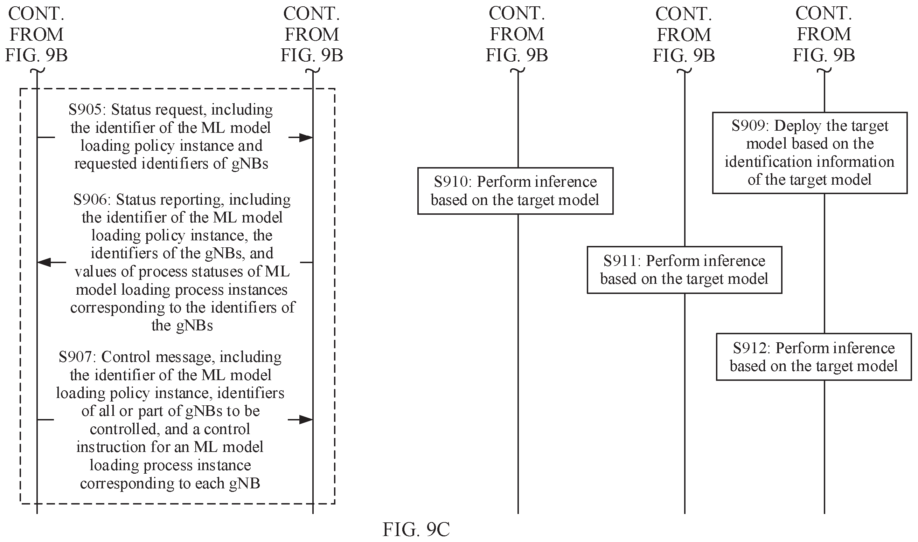

FIG. 9A, FIG. 9B, and FIG. 9C are a schematic flowchart of a model deployment method 900 according to an embodiment of this application. The method 900 includes the following steps.

S901: An NMS sends MLEntityLoadingPolicy to an EMS, where the MLEntityLoadingPolicy includes identification information of a target model, a deployment policy of the target model, and a deployment scope of the target model. Correspondingly, the EMS receives the MLEntityLoadingPolicy.

Optionally, a value of the role-related attribute aIMlInferenceFunctionRef of the MLEntityLoadingPolicy object may indicate the deployment scope of the target model, a value of the attribute policyForLoading may indicate the deployment policy of the target model, or a value of the attribute inferenceType or a value of the attribute mLEntityId may indicate the identification information of the target model. However, this is not limited in this application.

S902: The EMS creates an MLEntityLoadingPolicy instance.

S903: The EMS creates a plurality of MLEntityLoadingProcess instances.

In a possible implementation, when determining that the first gNB, the second gNB, and the third gNB all meet the deployment policy of the target model, the EMS creates a first MLEntityLoadingProcess instance for deploying the target model for the first gNB, a second MLEntityLoadingProcess instance for deploying the target model for the second gNB, and a third MLEntityLoadingProcess instance for deploying the target model for the third gNB.

Optionally, when the first gNB, the second gNB, and the third gNB all meet the deployment policy of the target model at the same time, the first MLEntityLoadingProcess instance, the second MLEntityLoadingProcess instance, and the third MLEntityLoadingProcess instance may be simultaneously created. When the first gNB, the second gNB, and the third gNB meet the deployment policy of the target model at different occasions, the first MLEntityLoadingProcess instance, the second MLEntityLoadingProcess instance, and the third MLEntityLoadingProcess instance may be created based on a sequence in which the first gNB, the second gNB, and the third gNB meet the deployment policy of the target model. This is not limited in this application.

For example, if the first MLEntityLoadingProcess instance is created before the second MLEntityLoadingProcess instance, a time at which the EMS sends first information to the first gNB may be earlier than a time at which the EMS sends the first information to the second gNB. This is not limited in this application.

In a possible implementation, a management mode for the deployment process of the target model may be default. In this embodiment, the management mode for the deployment process of the target model is independent management by default.

In another possible implementation, the management mode for the deployment process of the target model is indicated by the NMS, and indication information may be indicated by using infFuncBatchIndicator included in the MLEntityLoadingPolicy. In this embodiment, the infFuncBatchIndicator indicates that the management mode for the deployment process of the target model is independent management.

In still another possible implementation, the management mode for the deployment process of the target model is determined by the EMS. In this embodiment, the EMS determines that the management mode for the deployment process of the target model is independent management.

S904: The EMS sends an identifier of the MLEntityLoadingPolicy instance and a plurality of identifiers corresponding to the plurality of MLEntityLoadingProcess instances to the NMS. Correspondingly, the NMS receives a message.

Optionally, the EMS may send the identifier of the MLEntityLoadingPolicy instance to the NMS after S902 is performed, or may send the identifier of the MLEntityLoadingPolicy instance to the NMS after S903 is performed. The identifier of the MLEntityLoadingPolicy instance and the plurality of identifiers corresponding to the plurality of MLEntityLoadingProcess instances may be carried in a same message, or may be carried in different messages. This is not limited in this application.

S905: The NMS sends, to the EMS, a status request for MLEntityLoadingProcess instances respectively corresponding to all or part of the plurality of gNBs, where the status request includes the identifier of the MLEntityLoadingPolicy instance and requested identifiers of all the gNBs or the part of gNBs. Correspondingly, the EMS receives the request.

In another implementation of S905, a status request, sent by the NMS to the EMS, for MLEntityLoadingProcess instances respectively corresponding to all or part of the plurality of gNBs includes requested identifiers of the MLEntityLoadingProcess instances respectively corresponding to all or the part of the plurality of gNBs.

S906: The EMS reports, to the NMS, statuses of the MLEntityLoadingProcess instances respectively corresponding to all or the part of the plurality of gNBs, including the identifier of the MLEntityLoadingPolicy instance, identifiers of all the gNBs or the part of gNBs, and values of progressStatus of the MLEntityLoadingProcess instances corresponding to all the gNBs or the part of gNBs. Correspondingly, the NMS receives the statuses.

In another implementation of S906, the EMS reports, to the NMS, statuses of the MLEntityLoadingProcess instances respectively corresponding to all or the part of the plurality of gNBs, including the identifiers of the MLEntityLoadingProcess instances corresponding to all the gNBs or the part of gNBs and values of progressStatus of MLEntityLoadingProcess instances corresponding to all or part of target gNBs.

S907: The NMS sends a control message for a target model deployment process of all or the part of the plurality of target gNBs to the EMS, where the control message includes the identifier of the MLEntityLoadingPolicy instance, identifiers of all or part of gNBs to be controlled, and a control instruction for an MLEntityLoadingProcess instance corresponding to each gNB. Correspondingly, the EMS executes the control instruction.

In another implementation of S907, the NMS sends a control message for a target model deployment process of all or the part of the plurality of gNBs to the EMS, where the control message includes identifiers of MLEntityLoadingProcess instances corresponding to all the gNBs or the part of gNBs and a control instruction for an MLEntityLoadingProcess instance corresponding to each gNB.

S908: The EMS separately sends first information to the first gNB, the second gNB, and the third gNB, where the first information indicates to deploy the target model, and the first information includes the identification information of the target model. Correspondingly, the first gNB, the second gNB, and the third gNB receive the first information.

S909: The first gNB, the second gNB, and the third gNB deploy the target model based on the identification information of the target model.

S910: The first gNB, the second gNB, and the third gNB perform inference based on the target model.

It should be understood that S905, S906, and S907 are optional steps.

Beneficial effects of this embodiment are similar to those of the foregoing method 700, and details are not described again.

Optionally, in Scenario 2, when the management mode for the deployment process of the target model is determined by the EMS, and the EMS detects that the gNBs meet the deployment policy of the target model at the same time, the EMS may deploy the target model for the plurality of gNBs in a batch management mode. In this case, the EMS may create only one MLEntityLoadingProcess instance in S903. In S905, S906, and S907, interaction may be completed only by using the identifier of the MLEntityLoadingPolicy instance or the identifier of the MLEntityLoadingProcess instance. After the model is successfully deployed, the EMS may continue to perform S908 to trigger a subsequent procedure. Details are not described in this application.

Case 6: Scenario 2 + Target entity including some of a plurality of entities

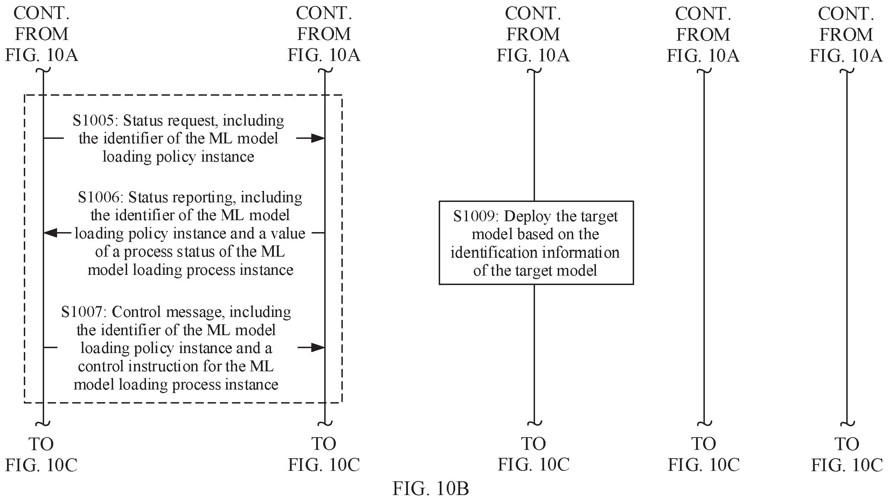

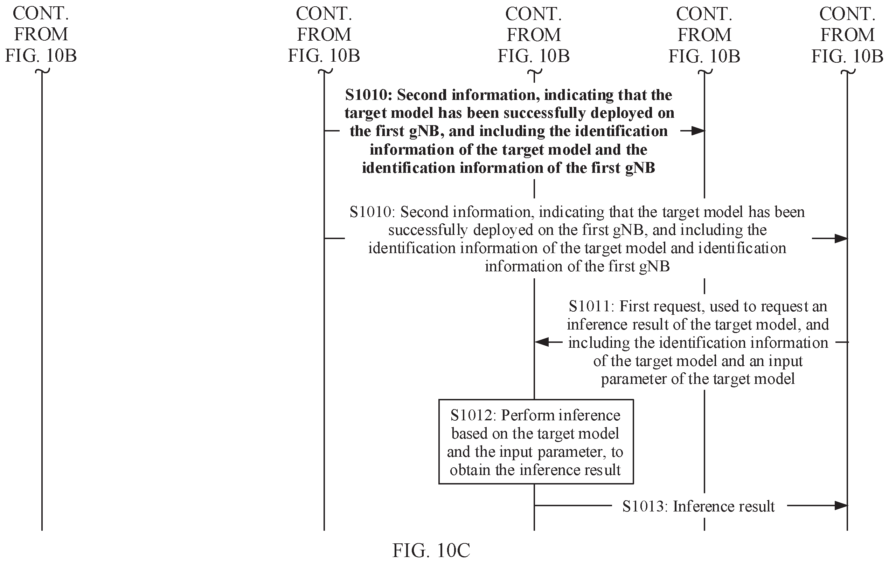

FIG. 10A, FIG. 10B, and FIG. 10C are a schematic flowchart of a model deployment method 1000 according to an embodiment of this application. The method 1000 includes the following steps.

S1001: An NMS sends MLEntityLoadingPolicy to an EMS, where the MLEntityLoadingPolicy includes identification information of a target model, a deployment policy of the target model, and a deployment scope of the target model. Correspondingly, the EMS receives the MLEntityLoadingPolicy.

It should be understood that, when a gNB that does not actually require deployment of the target model exists in the deployment scope of the target model, a gNB that actually requires deployment of the target model may be specified by the NMS, or may be determined by the EMS.

When the gNB that actually requires deployment of the target model is specified by the NMS, the MLEntityLoadingPolicy may further include an identifier of the gNB that is specified by the NMS and that actually requires deployment of the target model. There may be one or more gNBs that actually require deployment of the target model. This is not limited in this application.

When a plurality of gNBs actually require deployment of the target model, S1003 to S1007 in this embodiment may be replaced with S903 to S907. In this embodiment, an example in which there is one gNB that actually requires deployment of the target model is used. For example, the NMS specifies deployment of the target model on a first gNB. Optionally, in S1001, the MLEntityLoadingPolicy sent by the NMS to the EMS further includes identification information of the first gNB.

Optionally, a value of the role-related attribute aIMlInferenceFunctionRef of the MLEntityLoadingPolicy object may indicate the deployment scope of the target model, a value of the attribute policyForLoading may indicate the deployment policy of the target model, or a value of the attribute inferenceType or a value of the attribute mLEntityId may indicate the identification information of the target model, or a value of the attribute aIMlInferenceFunctionToLoadMlEntityRef may indicate the identification information of the first gNB that is specified by the NMS and that actually requires deployment of the target model. However, this is not limited in this application.

S1002: The EMS creates an MLEntityLoadingPolicy instance.

S1003: The EMS creates an MLEntityLoadingProcess instance.

In a possible implementation, when determining that the first gNB meets the deployment policy of the target model, the EMS creates the MLEntityLoadingProcess instance for deploying the target model for the first gNB.

S1004: The EMS sends an identifier of the MLEntityLoadingPolicy instance and an identifier of the MLEntityLoadingProcess instance to the NMS. Correspondingly, the NMS receives a message.

Optionally, the EMS may send the identifier of the MLEntityLoadingPolicy instance to the NMS after S1002 is performed, or may send the identifier of the MLEntityLoadingPolicy instance to the NMS after S1003 is performed. The identifier of the MLEntityLoadingPolicy instance and the identifier of the MLEntityLoadingProcess instance may be carried in a same message, or may be carried in different messages. This is not limited in this application.

S1005: The NMS sends a deployment status request of the target model to the EMS, where the deployment status request includes the identifier of the MLEntityLoadingPolicy instance. Correspondingly, the EMS receives the request.

In another implementation of S1005, the deployment status request of the target model sent by the NMS to the EMS includes the identifier of the MLEntityLoadingProcess instance.

S1006: The EMS reports deployment statuses of the target model in the plurality of gNBs to the NMS, where the deployment status includes the identifier of the MLEntityLoadingPolicy instance and a value of progressStatus of the MLEntityLoadingProcess instance. Correspondingly, the NMS receives the statuses.

In another implementation of S1006, the EMS reports the deployment statuses of the target model to the NMS, where the deployment status includes the identifier of the MLEntityLoadingProcess instance and a value of progressStatus of the MLEntityLoadingProcess instance.

S1007: The NMS sends a control message for a target model deployment process to the EMS, where the control message includes the identifier of the MLEntityLoadingPolicy instance and a control instruction for the MLEntityLoadingProcess instance. Correspondingly, the EMS executes the control instruction.

In another implementation of S1007, the NMS sends a control message for a target model deployment process to the EMS, where the control message includes the identifier of the MLEntityLoadingProcess instance and a control instruction for the MLEntityLoadingProcess instance.

S1008: The EMS sends first information to the first gNB, where the first information indicates to deploy the target model, and the first information includes the identification information of the target model. Correspondingly, the first gNB receives the first information.

S1009: The first gNB deploys the target model based on the identification information of the target model.

It should be understood that deploying the target model by the first gNB in S1008 may be understood as a process in which the first gNB activates the target model. The EMS may track, by using the MLEntityLoadingProcess instance created in S1002, progress of activating the target model by the first gNB, and perform S1010 when or after the first gNB activates the target model.

S1010: The EMS sends second information to the second gNB and the third gNB, where the second information indicates that the target model has been successfully deployed on the first gNB, and the second information includes identification information of the target model and the identification information of the first gNB. Correspondingly, the second gNB and the third gNB receive the second information.

Optionally, a manner in which the first gNB performs inference by using the target model may be as follows: The first gNB performs inference by using the target model that has been deployed on the first gNB.

Optionally, a manner in which the second gNB or the third gNB or both perform inference by using the target model may be as follows: The second gNB performs inference by using the target model deployed on the first gNB, and/or the third gNB performs inference by using the target model deployed on the first gNB. However, this is not limited in this application. For example, a process in which the third gNB performs inference by using the target model deployed on the first gNB may be shown in S810 to S812.

S1011: The third gNB sends a first request to the first gNB, where the first request is used to request an inference result of the target model, and the first request includes the identification information of the target model and an input parameter of the target model. Correspondingly, the first gNB receives the first request.

It should be understood that the input parameter of the target model included in the first request sent by the third gNB to the first gNB may be a parameter of a cell served by the third gNB. This is not limited in this application.

S1012: The first gNB performs inference based on the target model and the input parameter, to obtain the inference result.

It should be understood that when determining that the third gNB belongs to the deployment scope of the target model, the first gNB inputs the input parameter of the target model included in the first request into the target model that has been deployed on the first gNB, to perform inference, thereby obtaining the inference result.

S1013: The first gNB sends the inference result to the third gNB.

It should be understood that a process in which the second gNB performs inference by using the target model deployed on the first gNB is similar to S1010 to S1012, and details are not described again.

It should be understood that S1005, S1006, and S1007 are optional steps.

Beneficial effects of this embodiment are similar to those of the foregoing method 800, and details are not described again.

It should be understood that sequence numbers of the steps in the foregoing embodiments do not mean a sequence for performing. A sequence for performing processes should be determined based on functions and internal logic of the processes, and shall not constitute any limitation on implementation processes of embodiments of this application.

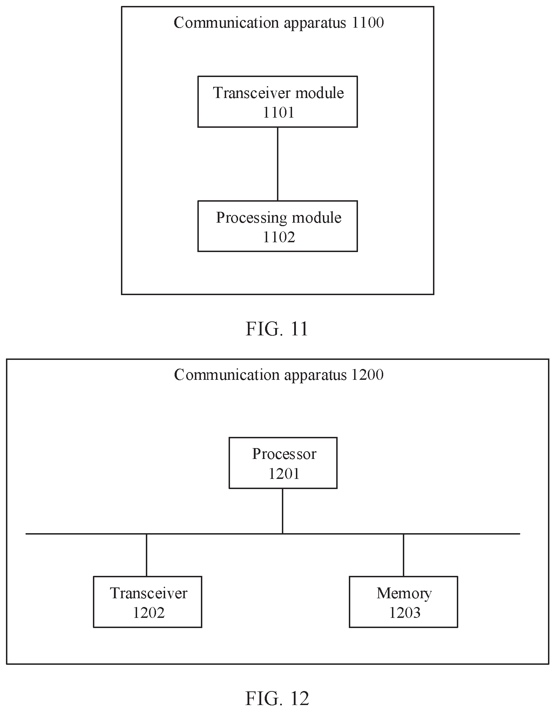

The foregoing describes in detail the model deployment methods in embodiments of this application with reference to FIG. 5 to FIG. 10C. The following describes in detail communication apparatuses in embodiments of this application with reference to FIG. 11 and FIG. 12.

FIG. 11 shows a communication apparatus 1100 according to an embodiment of this application. The communication apparatus 1100 includes a transceiver module 1101 and a processing module 1102.

In a first possible implementation, the communication apparatus 1100 is configured to implement steps and procedures corresponding to the foregoing second apparatus (for example, the EMS).

The transceiver module 1101 is configured to receive identification information of a target model and a deployment scope of the target model, where the deployment scope of the target model indicates a plurality of entities that need to use the target model for inference. The processing module 1102 is configured to deploy the target model based on the identification information of the target model and the deployment scope of the target model.

Optionally, the deployment scope of the target model includes one or more of the following: information about a geographical area; identification information of a network area; identification information of a plurality of inference functions; or identification information of a plurality of entities.

Optionally, the transceiver module 1101 is further configured to send first information to a target entity, where the first information indicates the target entity to deploy the target model, and the target entity includes all or part of the plurality of entities.

Optionally, the target entity includes all of the plurality of entities, and the first information includes the identification information of the target model.

Optionally, the target entity includes part of the plurality of entities, and the first information includes the identification information of the target model and the deployment scope of the target model.

Optionally, the transceiver module 1101 is further configured to receive identification information of the target entity.

Optionally, the transceiver module 1101 is further configured to send second information, where the second information indicates that the target model is successfully deployed, and the second information includes the identification information of the target model and the identification information of the target entity.

Optionally, the transceiver module 1101 is further configured to send first identification information and identification information of a first process, where the first identification information is associated with a message that carries the identification information of the target model, there is a mapping relationship between the first identification information and the first process, and the first process is used to manage a deployment process of the target model.

Optionally, the transceiver module 1101 is further configured to receive first indication information, where the first indication information indicates a management mode for the deployment process of the target model.

Optionally, the deployment process management mode is batch management.

Optionally, the management mode for the deployment process of the target model is batch management by default.

Optionally, the first process corresponds to an overall deployment process of the target model.

Optionally, the transceiver module 1101 is further configured to send third information, where the third information includes the first identification information and a status of the first process, or the identification information of the first process and the status of the first process, and the status includes: running, canceling, canceled, suspended, or finished.

Optionally, the transceiver module 1101 is further configured to receive fourth information, where the fourth information is used to control the overall deployment process of the target model, the fourth information includes the first identification information and a control instruction for the first process, or the identification information of the first process and the control instruction, and the control instruction includes cancel, suspend, or start.

Optionally, the management mode for the deployment process of the target model is independent management by default.

Optionally, the deployment process management mode is independent management.

Optionally, the first process includes a plurality of processes, and any one of the plurality of processes corresponds to model deployment for one entity.

Optionally, the transceiver module 1101 is further configured to send fifth information, where the fifth information includes: the first identification information, identification information of entities corresponding to all or part of the plurality of processes, and respective statuses of all or part of the processes; or identification information of all or part of the processes, and the respective statuses of all or part of the processes, where the status includes: running, canceling, canceled, suspended, or finished.

Optionally, the transceiver module 1101 is further configured to receive sixth information, where the sixth information is used to control all or part of the plurality of processes, and the sixth information includes: the first identification information, the identification information of the entities corresponding to all or part of the processes, and a control instruction for each of all or part of the processes; or the identification information of all or part of the processes, and the control instruction.

Optionally, the identification information of the target model is sent via a request message or a configuration message.

Optionally, the deployment scope of the target model is sent via a request message or a configuration message.

In a second possible implementation, the communication apparatus 1100 is configured to implement steps and procedures corresponding to the foregoing first apparatus (for example, the NMS).

The processing module 1102 is configured to determine identification information of a target model and a deployment scope of the target model, where the deployment scope of the target model indicates a plurality of entities that need to use the target model for inference. The transceiver module 1101 is configured to send the identification information of the target model and the deployment scope of the target model.

Optionally, the deployment scope of the target model includes one or more of the following: information about a geographical area; identification information of a network area; identification information of a plurality of inference functions; or identification information of a plurality of entities.

Optionally, the transceiver module 1101 is further configured to send identification information of a target entity, where the target entity includes some of the plurality of entities, and the target entity is determined based on resources and/or capabilities of the plurality of entities.

Optionally, the transceiver module 1101 is further configured to send first identification information and identification information of a first process, where the first identification information is associated with a message that carries the identification information of the target model, there is a mapping relationship between the first identification information and the first process, and the first process is used to manage a deployment process of the target model.

Optionally, the transceiver module 1101 is further configured to receive first indication information, where the first indication information indicates a management mode for the deployment process of the target model.

Optionally, the deployment process management mode is batch management.

Optionally, the management mode for the deployment process of the target model is batch management by default.

Optionally, the first process corresponds to an overall deployment process of the target model.

Optionally, the transceiver module 1101 is further configured to send third information, where the third information includes the first identification information and a status of the first process, or the identification information of the first process and the status of the first process, and the status includes: running, canceling, canceled, suspended, or finished.

Optionally, the transceiver module 1101 is further configured to receive fourth information, where the fourth information is used to control the overall deployment process of the target model, the fourth information includes the first identification information and a control instruction for the first process, or the identification information of the first process and the control instruction, and the control instruction includes cancel, suspend, or start.

Optionally, the management mode for the deployment process of the target model is independent management by default.

Optionally, the deployment process management mode is independent management.

Optionally, the first process includes a plurality of processes, and any one of the plurality of processes corresponds to model deployment for one entity.

Optionally, the transceiver module 1101 is further configured to send fifth information, where the fifth information includes: the first identification information, identification information of entities corresponding to all or part of the plurality of processes, and respective statuses of all or part of the processes; or identification information of all or part of the processes, and the respective statuses of all or part of the processes, where the status includes: running, canceling, canceled, suspended, or finished.

Optionally, the transceiver module 1101 is further configured to receive sixth information, where the sixth information is used to control all or part of the plurality of processes, and the sixth information includes: the first identification information, the identification information of the entities corresponding to all or part of the processes, and a control instruction for each of all or part of the processes; or the identification information of the entities corresponding to all or part of the processes, and the control instruction.

Optionally, the identification information of the target model is sent via a request message or a configuration message.

Optionally, the deployment scope of the target model is sent via a request message or a configuration message.

In a third possible implementation, the communication apparatus 1100 is configured to implement steps and procedures corresponding to the third apparatus (for example, an entity or a gNB).

The transceiver module 1101 is configured to receive first information, where the first information indicates to deploy a target model, the first information includes a deployment scope of the target model and identification information of the target model, and the deployment scope of the target model indicates a plurality of entities that need to use the target model for inference. The processing module 1102 is configured to deploy the target model based on the first information.

Optionally, the deployment scope of the target model includes one or more of the following: information about a geographical area; identification information of a network area; identification information of a plurality of inference functions; or identification information of a plurality of entities.

Optionally, the transceiver module 1101 is further configured to receive a first request, where the first request is used to request an inference result of the target model, and the first request includes the identification information of the target model and an input parameter of the target model. The processing module 1102 is further configured to obtain the inference result based on the input parameter by using the target model.

Optionally, the transceiver module 1101 is further configured to send the inference result.

Optionally, the transceiver module 1101 is further configured to receive second information, where the second information indicates that the target model is successfully deployed, and the second information includes the identification information of the target model and the identification information of the target entity.

It should be understood that the apparatus 1100 herein is represented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 1100 may be specifically the first apparatus, the second apparatus, or the third apparatus in the foregoing embodiments, or functions described in the foregoing embodiments may be integrated into the apparatus 1100. The apparatus 1100 may be configured to perform procedures and/or steps corresponding to the first apparatus, the second apparatus, or the third apparatus in the foregoing method embodiments. To avoid repetition, details are not described herein again.

The apparatus 1100 has a function of implementing corresponding steps performed by the first apparatus, the second apparatus, or the third apparatus in the foregoing method. The function may be implemented by hardware, or may be implemented by hardware executing corresponding software. The hardware or the software includes one or more modules corresponding to the function.

In embodiments of this application, the apparatus 1100 in FIG. 11 may alternatively be a chip or a chip system, for example, a system on chip (system on chip, SoC).

FIG. 12 is a block diagram of a communication apparatus 1200 according to an embodiment of this application. The apparatus 1200 includes a processor 1201, a transceiver 1202, and a memory 1203. The processor 1201, the transceiver 1202, and the memory 1203 communicate with each other through an internal connection path. The memory 1203 is configured to store instructions. The processor 1201 is configured to execute the instructions stored in the memory 1203, to control the transceiver 1202 to send a signal and/or receive a signal.

It should be understood that the apparatus 1200 may be specifically the first apparatus, the second apparatus, or the third apparatus in the foregoing embodiments, and may be configured to perform steps and/or procedures corresponding to the first apparatus, the second apparatus, or the third apparatus in the foregoing method embodiments. Optionally, the memory 1203 may include a read-only memory and a random access memory, and provide an instruction and data to the processor. A part of the memory may further include a non-volatile random access memory. For example, the memory may further store information of a device type. The processor 1201 may be configured to execute the instructions stored in the memory. When the processor 1201 executes the instructions stored in the memory, the processor 1201 is configured to perform steps and/or procedures in the foregoing method embodiments. The transceiver 1202 may include a transmitter and a receiver. The transmitter may be configured to implement steps and/or procedures corresponding to the transceiver and used to perform a sending action. The receiver may be configured to implement steps and/or procedures corresponding to the transceiver and used to perform a receiving action.

It should be understood that in embodiments of this application, the processor may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable storage medium. The computer-readable storage medium is configured to store a computer program, and the computer program is used to implement the method shown in the foregoing method embodiments.

This application further provides a computer program product. The computer program product includes computer program code (which may also be referred to as a computer program or instructions). When the computer program is run on a computer, the computer may perform the method shown in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, a portion of the technical solutions in this application may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A model deployment method, wherein the method comprises:
receiving identification information of a target model and a deployment scope of the target model, wherein the deployment scope of the target model indicates a plurality of entities that need to use the target model for inference; and
deploying the target model based on the identification information of the target model and the deployment scope of the target model.

2. The method according to claim 1, wherein the deployment scope of the target model comprises one or more of the following:
information about a geographical area;
identification information of a network area;
identification information of a plurality of inference functions; or
identification information of a plurality of entities.

3. The method according to claim 1 or 2, wherein the method further comprises:
sending first identification information and identification information of a first process, wherein the first identification information is associated with a message that carries the identification information of the target model, there is a mapping relationship between the first identification information and the first process, and the first process is used to manage a deployment process of the target model.

4. The method according to claim 3, wherein a management mode for the deployment process of the target model is batch management.

5. The method according to claim 4, wherein the first process corresponds to an overall deployment process of the target model.

6. The method according to claim 4 or 5, wherein the method further comprises:
sending third information, wherein the third information comprises the first identification information and a status of the first process, or the identification information of the first process and the status of the first process, and the status comprises: running, canceling, canceled, suspended, or finished.

7. The method according to any one of claims 4 to 6, wherein the method further comprises:
receiving fourth information, wherein the fourth information is used to control the overall deployment process of the target model, the fourth information comprises the first identification information and a control instruction for the first process, or the identification information of the first process and the control instruction, and the control instruction comprises cancel, suspend, or start.

8. The method according to claim 3, wherein a management mode for the deployment process of the target model is independent management.

9. The method according to claim 8, wherein the first process comprises a plurality of processes, and any one of the plurality of processes corresponds to model deployment for one entity.

10. The method according to claim 8 or 9, wherein the method further comprises:
sending fifth information, wherein the fifth information comprises: the first identification information, identification information of entities corresponding to all or part of the plurality of processes, and respective statuses of all or part of the processes; or
identification information of all or part of the processes, and the respective statuses of all or part of the processes, wherein the status comprises: running, canceling, canceled, suspended, or finished.

11. The method according to any one of claims 8 to 10, wherein the method further comprises:
receiving sixth information, wherein the sixth information is used to control all or part of the plurality of processes, and the sixth information comprises: the first identification information, the identification information of the entities corresponding to all or part of the processes, and a control instruction for each of all or part of the processes; or
the identification information of all or part of the processes, and the control instruction.

12. The method according to any one of claims 1 to 11, wherein the method further comprises:
receiving first indication information, wherein the first indication information indicates the management mode for the deployment process of the target model.

13. The method according to any one of claims 4 to 7, wherein the management mode for the deployment process of the target model is batch management by default.

14. The method according to any one of claims 8 to 11, wherein the management mode for the deployment process of the target model is independent management by default.

15. A model deployment method, wherein the method comprises:
determining identification information of a target model and a deployment scope of the target model, wherein the deployment scope of the target model indicates a plurality of entities that need to use the target model for inference; and
sending the identification information of the target model and the deployment scope of the target model.

16. The method according to claim 15, wherein the deployment scope of the target model comprises one or more of the following:
information about a geographical area;
identification information of a network area;
identification information of a plurality of inference functions; or
identification information of a plurality of entities.

17. The method according to claim 15 or 16, wherein the method further comprises:
sending first identification information and identification information of a first process, wherein the first identification information is associated with a message that carries the identification information of the target model, there is a mapping relationship between the first identification information and the first process, and the first process is used to manage a deployment process of the target model.

18. The method according to claim 17, wherein a management mode for the deployment process of the target model is batch management.

19. The method according to claim 18, wherein the first process corresponds to an overall deployment process of the target model.

20. The method according to claim 18 or 19, wherein the method further comprises:
sending third information, wherein the third information comprises the first identification information and a status of the first process, or the identification information of the first process and the status of the first process, and the status comprises: running, canceling, canceled, suspended, or finished.

21. The method according to any one of claims 18 to 20, wherein the method further comprises:
receiving fourth information, wherein the fourth information is used to control the overall deployment process of the target model, the fourth information comprises the first identification information and a control instruction for the first process, or the identification information of the first process and the control instruction, and the control instruction comprises cancel, suspend, or start.

22. The method according to claim 17, wherein a management mode for the deployment process of the target model is independent management.

23. The method according to claim 22, wherein the first process comprises a plurality of processes, and any one of the plurality of processes corresponds to model deployment for one entity.

24. The method according to claim 22 or 23, wherein the method further comprises:
sending fifth information, wherein the fifth information comprises: the first identification information, identification information of entities corresponding to all or part of the plurality of processes, and respective statuses of all or part of the processes; or
identification information of all or part of the processes, and the respective statuses of all or part of the processes, wherein the status comprises: running, canceling, canceled, suspended, or finished.

25. The method according to any one of claims 22 to 24, wherein the method further comprises:
receiving sixth information, wherein the sixth information is used to control all or part of the plurality of processes, and the sixth information comprises: the first identification information, the identification information of the entities corresponding to all or part of the processes, and a control instruction for each of all or part of the processes; or
the identification information of the entities corresponding to all or part of the processes, and the control instruction.

26. The method according to any one of claims 15 to 25, wherein the method further comprises:
receiving first indication information, wherein the first indication information indicates the management mode for the deployment process of the target model.

27. The method according to any one of claims 18 to 21, wherein the management mode for the deployment process of the target model is batch management by default.

28. The method according to any one of claims 22 to 25, wherein the management mode for the deployment process of the target model is independent management by default.

29. The method according to any one of claims 1 to 28, wherein the deployment scope of the target model is sent via a request message or a configuration message.

30. A communication apparatus, comprising: a module configured to perform the method according to any one of claims 1 to 14, or a module configured to perform the method according to any one of claims 15 to 29.

31. A communication apparatus, comprising: a processor, wherein the processor is coupled to a memory, the memory stores computer-executable instructions, and the processor executes the computer-executable instructions stored in the memory, so that the processor performs the method according to any one of claims 1 to 14, or performs the method according to any one of claims 15 to 29.

32. A communication system, comprising a first apparatus and a second apparatus, wherein the second apparatus is configured to perform the method according to any one of claims 1 to 14, wherein the first apparatus is configured to perform the method according to any one of claims 15 to 29.

33. A computer-readable storage medium, configured to store a computer program, wherein the computer program comprises instructions used to implement the method according to any one of claims 1 to 14, or instructions used to perform the method according to any one of claims 15 to 29.

34. A computer program product, wherein the computer program product comprises computer program code, and when the computer program code is run on a computer, the computer is enabled to implement the method according to any one of claims 1 to 14, or perform the method according to any one of claims 15 to 29.
